# EUROPEAN PATENT APPLICATION

(11) **EP 4 625 813 A1**
(43) Date of publication of application: **01.10.2025**
(21) Application number: 25150830.5
(22) Date of filing: 09.01.2025
(51) Int. Cl.: H02S 30/10

(54) **PHOTOVOLTAIC MODULE**

(30) Priority: 29.03.2024 CN 202410381476; 29.03.2024 CN 202420632084 U; 22.04.2024 CN 202410489004; 22.04.2024 CN 202420833456 U
(71) Applicant: JINKO SOLAR CO., LTD., Shangrao, Jiangxi 334100 (CN); Zhejiang Jinko Solar Co., Ltd., Haining, Zhejiang 314416 (CN); Jinko Solar (Haining) Co., Ltd., Haining City, Zhejiang (CN)
(72) Inventor: TAO, Wusong, Shangrao, Jiangxi (CN); XIE, Yunfei, Shangrao, Jiangxi (CN); WANG, Junqing, Shangrao, Jiangxi (CN); PENG, Changchun, Shangrao, Jiangxi (CN); SHI, Jiahui, Shangrao, Jiangxi (CN); CHEN, Yu, Shangrao, Jiangxi (CN); CHEN, Zhendong, Shangrao, Jiangxi (CN); ZHOU, Yunfeng, Shangrao, Jiangxi (CN); ZHAO, Jinhui, Shangrao, Jiangxi (CN); CHEN, Xinyi, Shangrao, Jiangxi (CN); ZHAO, Qiuyu, Shangrao, Jiangxi (CN); BO, Yaoyi, Shangrao, Jiangxi (CN); YAO, Yichao, Shangrao, Jiangxi (CN); GUO, Zhiqiu, Shangrao, Jiangxi (CN)
(74) Representative: Balder IP Law, S.L.

(57) **Abstract**

Disclosed is a photovoltaic module including a laminate and a frame. The frame includes a clamping part, a first support part, and a second support part, and a first edge of the laminate is located in a space defined by the clamping part. The first and second support parts are arranged on a first side of the laminate opposite to a second side of the laminate configured to face sunlight during operation of the photovoltaic module, and are spaced apart in a first direction, and the first support part is located on a side of the second support part close to the first edge. The clamping part includes a first part, located on the second side of the laminate, and having a first end, located on a side of the first part away from the first edge in the first direction, and the first end is aligned with the first support part in the thickness direction.

## Description

### TECHNICAL FIELD

Various embodiments of the present disclosure relate to the field of solar cell technologies, and in particular, to a photovoltaic module.

### BACKGROUND

A photovoltaic module includes a laminate and a frame sleeved on an edge of the laminate. The frame is configured to be fixed to a roofing surface to mount the photovoltaic module on the roofing surface. In the related art, sizes of some frame bodies of the frame located on a light-receiving surface of the laminate are relatively large, so that a shielding area of the frame for the laminate is relatively large. On the premise that a light-receiving area of the laminate is satisfied, an overall length dimension and width dimension of the photovoltaic module are relatively large.

### SUMMARY

The embodiments of the present disclosure provide a photovoltaic module, which can reduce a shielding area of a frame on a light- receiving surface of a laminate, to reduce an overall size of the photovoltaic module. The invention is set out in the appended set of claims.

The embodiments of the present disclosure provide a photovoltaic module. The photovoltaic module includes a laminate and a frame. The frame includes a clamping part, a first support part, and a second support part, and a first edge of the laminate is located in a space defined by the clamping part; the first support part and the second support part are arranged on a first side of the laminate opposite to a second side of the laminate configured to face sunlight during operation of the photovoltaic module, the first support part and the second support part are spaced apart in a first direction, and the first support part is located on a side of the second support part close to the first edge; and the clamping part includes a first part, located on the second side of the laminate, the first part includes a first end, located on a side of the first part away from the first edge in the first direction, and the first end is aligned with the first support part in a thickness direction of the laminate.

In the present disclosure, the first end is aligned with the first support part in the thickness direction of the laminate, which can improve overall structural strength of the frame, and reduce a risk of deforming the frame in a case that the laminate is pulled up or pressed down, thereby helping improve trampling resistance and wind uplift resistance of the frame and the photovoltaic module, and helping reduce a shielding area of the first part for the laminate. In a case that an overall size of the laminate is fixed, the light receiving area of the laminate can be increased, and an arrangement quantity of solar cells in the light receiving area can be increased, thereby helping increase an output power of the photovoltaic module. In a case that the light receiving area of the laminate is fixed, the overall size of the laminate can be reduced, thereby helping increase an arrangement quantity of photovoltaic modules in a limited space.

It should be understood that the foregoing general descriptions and the following detailed descriptions are only exemplary, and cannot limit the present disclosure.

### BRIEF DESCRIPTION OF THE DRAWINGS

FIG. 1 is a bottom view of a photovoltaic module according to an embodiment of the present disclosure.
FIG. 2 is a bottom view of a photovoltaic module according to another embodiment of the present disclosure.
FIG. 3 is a cross-sectional view of a partial structure of a laminate according to an embodiment of the present disclosure.
FIG. 4 is a cross-sectional view of a partial structure of a cell in FIG. 3 according to an embodiment of the present disclosure.
FIG. 5 is a schematic structural diagram of a frame according to an embodiment of the present disclosure.
FIG. 6 is a schematic structural diagram of a frame and a pressing block according to an embodiment of the present disclosure.
FIG. 7 is a schematic structural diagram of a frame and a pressing block according to another embodiment of the present disclosure.
FIG. 8 is an enlarged view of a partial structure of a frame according to an embodiment of the present disclosure.
FIG. 9 is a schematic structural diagram of the frame in FIG. 6.
FIG. 10 is an enlarged view of a part A in FIG. 9.
FIG. 11 is a schematic structural diagram of a frame according to another embodiment of the present disclosure.
FIG. 12 is a schematic structural diagram of a frame according to a further embodiment of the present disclosure.
FIG. 13 is a schematic structural diagram of a photovoltaic module mounting structure according to an embodiment of the present disclosure.
FIG. 14 is a schematic diagram of assembling a frame and a pressing block in a direction according to an embodiment of the present disclosure.
FIG. 15 is a schematic diagram of assembling a frame and a pressing block in another direction according to an embodiment of the present disclosure.
FIG. 16 is a schematic structural diagram of a frame according to an embodiment of the present disclosure.
FIG. 17 is an exploded view of a frame and a pressing block according to an embodiment of the present disclosure.
FIG. 18 is a schematic structural diagram of another photovoltaic module mounting structure according to an embodiment of the present disclosure.
FIG. 19 is a schematic diagram of assembling another frame, a laminate, and a pressing block according to an embodiment of the present disclosure.
FIG. 20 is a schematic structural diagram of a laminate according to an embodiment of the present disclosure.
FIG. 21 is a schematic structural diagram of a pressing block according to an embodiment of the present disclosure.
FIG. 22 is a schematic structural diagram of another pressing block according to an embodiment of the present disclosure.
FIG. 23 is a schematic structural diagram of hiding a first connection member and a second connection member in another pressing block according to an embodiment of the present disclosure.
FIG. 24 is a schematic structural diagram of another frame according to an embodiment of the present disclosure.
FIG. 25 is a schematic structural diagram of a first type of frame body according to an embodiment of the present disclosure.
FIG. 26 is a top view of a corner brace according to an embodiment of the present disclosure.
FIG. 27 is a top view of another corner brace according to an embodiment of the present disclosure.
FIG. 28 is a schematic cross-sectional view in a horizontal direction when two types of frame bodies and corner braces are assembled according to an embodiment of the present disclosure.
FIG. 29 is a schematic diagram of a partially enlarged structure of a clearance groove according to an embodiment of the present disclosure.
FIG. 30 is a schematic cross-sectional view in a horizontal direction when a corner brace and a frame body are assembled according to an embodiment of the present disclosure.
FIG. 31 is a schematic cross-sectional view in a horizontal direction when another corner brace and a frame body are assembled according to an embodiment of the present disclosure.
FIG. 32 is a schematic structural diagram of a second type of frame body according to an embodiment of the present disclosure.
FIG. 33 is a schematic structural diagram of a third type of frame body according to an embodiment of the present disclosure.
FIG. 34 is a schematic structural diagram of assembling two types of fixing components and the third type of frame body according to an embodiment of the present disclosure.
FIG. 35 is a schematic structural diagram of a fourth type of frame body according to an embodiment of the present disclosure.
FIG. 36 is a schematic structural diagram of a fifth type of frame body according to an embodiment of the present disclosure.
FIG. 37 is a schematic structural diagram of assembling a fixing component and the fifth type of frame body according to an embodiment of the present disclosure.
FIG. 38 is a schematic structural diagram of a sixth type of frame body according to an embodiment of the present disclosure.
FIG. 39 is a schematic structural diagram of assembling a fixing component and the sixth type of frame body according to an embodiment of the present disclosure.
FIG. 40 is a schematic structural diagram of a seventh type of frame body according to an embodiment of the present disclosure.
FIG. 41 is a schematic structural diagram of assembling two types of fixing components and the seventh type of frame body according to an embodiment of the present disclosure.
FIG. 42 is a schematic diagram of a partially enlarged structure of the frame body shown in FIG. 33 according to an embodiment of the present disclosure.
FIG. 43 is a schematic structural diagram of a frame according to a further embodiment of the present disclosure.
FIG. 44 is a schematic diagram of a partially enlarged structure of the frame shown in FIG. 43 according to an embodiment of the present disclosure.
FIG. 45 is a schematic structural diagram of a frame according to yet another embodiment of the present disclosure.

### DETAILED DESCRIPTION OF THE EMBODIMENTS

To make the technical solutions in the present disclosure more comprehensible, the following describes the embodiments of the present disclosure in detail with reference to the accompanying drawings.

It should be clear that the described embodiments are merely some but not all of the embodiments of the present disclosure. All other embodiments obtained by a person of ordinary skill in the art based on the embodiments of the present disclosure without making creative efforts shall fall within the protection scope of the present disclosure.

The terms used in the embodiments of the present disclosure are merely for the purpose of illustrating specific embodiments, and are not intended to limit the present disclosure. The terms "a", "said", and "the" of singular forms used in the embodiments and the appended claims of the present disclosure are also intended to include plural forms, unless otherwise specified in the context clearly.

The term "and/or" used in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be noted that orientation terms such as "above", "below", "left", and "right" described in the embodiments of the present disclosure are described from views shown in the accompanying drawings, and should not be construed as a limitation to the embodiments of the present disclosure. In addition, in the context, it is further understood that when an element is mentioned as being connected "on" or "under" another element, the element may be not merely connected "on" or "under" another element, but also indirectly connected "on" or "under" another element through an intermediate element.

In the descriptions of the embodiments of the present disclosure, terms such as "first" and "second" are used merely for distinguishing different objects, and shall not be construed as indicating or implying relative importance or implying a quantity, a specific order, or a priority relation of indicated technical features. In the descriptions of the embodiments of the present disclosure, "a plurality of" means two or more, unless otherwise definitely and specifically limited.

In the descriptions of the embodiments of the present disclosure, direction or position relationships indicated by technical terms such as "length", "width", "thickness", "above", "below", "horizontal", "vertical", "top", "bottom", "inside", and "outside" are direction or position relationships based on the accompanying drawings, and are used only for conveniently describing the embodiments of the present disclosure and simplifying descriptions, instead of indicating or suggesting that a represented apparatus or component needs to have a particular direction or is constructed and operated in a particular direction, and therefore shall not be understood as limiting the embodiments of the present disclosure.

In the descriptions of the embodiments of the present disclosure, unless otherwise explicitly specified or defined, terms such as "mount", "install", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components. A person of ordinary skill in the art may understand the specific meanings of the foregoing terms in the embodiments of the present disclosure according to specific situations.

In the accompanying drawings corresponding to the embodiments of the present disclosure, thicknesses and areas of layers are exaggerated for better understanding and ease of description. When it is described that a component is on another component or on a surface of another component, the component may be "directly" located on the surface of the another component, or a third component may exist between the two components. In contrast, when it is described that a component is on a surface of another component or a component is formed or arranged on a surface of another component, it means that there is no third component between the two components. In addition, when it is described that a component is "substantially" formed on another component, it means that the component is not formed on an entire surface (or a front surface) of the another component, nor is the component formed on some edges of the entire surface.

In the description of the embodiments of the present disclosure, when a component "includes" another component, unless otherwise specified, other components are not excluded, and the other components may be further included.

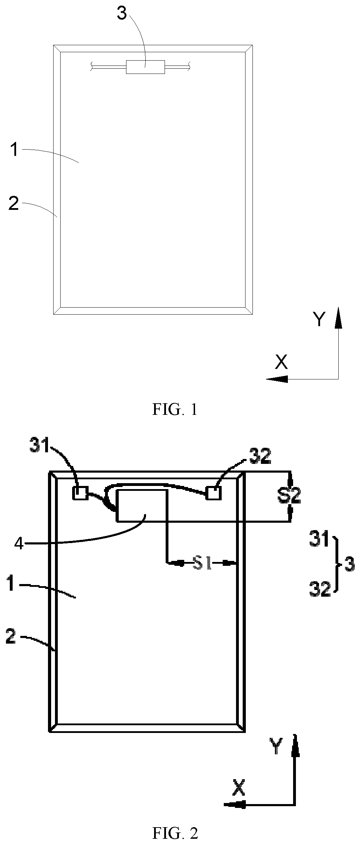

The embodiments of the present disclosure provide a photovoltaic module. As shown in FIG. 1, the photovoltaic module includes a laminate 1, a frame 2 sleeved on an edge of the laminate 1, and a junction box 3 mounted on the laminate 1. The junction box 3 is electrically connected to the laminate 1, and the junction box 3 is configured to implement electrical connection between adjacent photovoltaic modules and between a photovoltaic module and an external electrical appliance.

The junction box 3 may be arranged on a back surface of the laminate 1, to delay aging of the junction box 3 and reduce a risk of damage to the junction box 3 due to factors such as aging, corrosion, and immersion by rainwater, thereby prolonging service life of the junction box 3, and helping improve operating stability of the junction box 3 and the photovoltaic module. In addition, the junction box 3 may alternatively be arranged on a light-receiving surface of the laminate 1, to reduce the space occupied by the junction box 3 on the back surface of the laminate 1, thereby reducing the mounting height of the photovoltaic module.

In an embodiment, as shown in FIG. 1, the junction box 3 is an integrated junction box, that is, a positive bus bar and a negative bus bar of the laminate 1 are electrically connected to the same integrated junction box separately. In addition, the integrated junction box includes a positive cable and a negative cable. For example, the junction box 3 is configured to implement electrical connection between adjacent photovoltaic modules. In this case, the integrated junction box is electrically connected to an adjacent photovoltaic module on one side by the positive cable, and is electrically connected to a photovoltaic module on the other side by the negative cable, to implement series or parallel connection between the adjacent photovoltaic modules.

In another embodiment, as shown in FIG. 2, a junction box 3 may alternatively include a first junction box 31 and a second junction box 32. The first junction box 31 is connected to a positive bus bar of a laminate 1, a cable of the first junction box 31 is electrically connected to an adjacent photovoltaic module on one side, the second junction box 32 is connected to a negative bus bar of the laminate 1, and a cable of the second junction box 32 is electrically connected to a photovoltaic module on the other side, to implement series or parallel connection between the adjacent photovoltaic modules.

The junction box 3 may be an integrated junction box, or may include a first junction box 31 and a second junction box 32 that are separate, increasing diversity in selection types of the junction box 3. When the junction box 3 is the integrated junction box, the mounting operation of the junction box 3 on the laminate 1 is simplified, which helps shorten the mounting time of the junction box 3. When the junction box 3 includes the first junction box 31 and the second junction box 32 that are separate, costs of the junction box 3 can be reduced.

The laminate 1 includes two short sides extending in a first direction X and two long sides extending in a second direction Y As shown in FIG. 1 and FIG. 2, in the second direction Y, the junction box 3 may be arranged on a side close to a short side. Alternatively, in the first direction X, the junction box 3 may be arranged on a side close to a long side. When the junction box 3 includes the first junction box 31 and the second junction box 32, in the first direction X, the first junction box 31 may be arranged on a side close to a left long side, and the second junction box 32 may be arranged on the side close to the left long side, so that the first junction box 31 and the second junction box 32 are located on a same side of the laminate 1 and are distributed in the second direction Y, or the second junction box 32 may be arranged on a side close to the right long side, so that the first junction box 31 and the second junction box 32 are located on two sides of the laminate 1 and are distributed in the first direction X. Similarly, in the second direction Y, the first junction box 31 may alternatively be arranged on a side close to a left short side, and the second junction box 32 may be arranged on the side close to the left short side, so that the first junction box 31 and the second junction box 32 are located on a same side of the laminate 1 and are distributed in the first direction X, or the second junction box 32 may be arranged on a side close to the right short side, so that the first junction box 31 and the second junction box 32 are located on two sides of the laminate 1 and are distributed in the second direction Y An arrangement position, that is, a distribution manner, of the junction box 3 is not specially limited in this embodiment of the present disclosure, to increase flexibility of a mounting position of the junction box 3.

As shown in FIG. 2, the photovoltaic module further includes an inverter 4, and the junction box 3 and the inverter 4 are located at a same layer of the laminate 1, to facilitate electrical connection between the junction box 3 and the inverter 4. For example, as shown in FIG. 2, in the second direction Y, both the junction box 3 and the inverter 4 are located on a side close to a short side of the laminate 1, and the junction box 3 and the inverter 4 are arranged in the first direction X.

In the first direction X, a minimum vertical distance S1 between the inverter 4 and an edge of the photovoltaic module satisfies: 350 mm ≤ S1 ≤ 400 mm, and for example, S1 may be 350 mm, 352 mm, 354 mm, 356 mm, 358 mm, 360 mm, 362 mm, 364 mm, 368 mm, 370 mm, 372 mm, 374 mm, 376 mm, 378 mm, 380 mm, 382 mm, 384 mm, 386 mm, 388 mm, 390 mm, 392 mm, 394 mm, 396 mm, 398 mm, 400 mm, or the like. When S1 is small or large, for example, S1 <350 mm, or S1 > 400 mm, there is a risk that the inverter 4 exceeds a surface of the photovoltaic module and is partially suspended or exposed, thereby reducing stability of the connection between the inverter 4 and the laminate 1. Therefore, 350 mm ≤ S1 ≤ 400 mm, reducing a risk of damaging the inverter 4, thereby helping improve operating stability of the inverter 4 and prolonging the service life of the inverter 4.

In the second direction Y, a maximum vertical distance S2 between the inverter 4 and an edge of the photovoltaic module satisfies: 240 mm ≤ S2 ≤ 300 mm, and for example, S2 may be 240 mm, 242 mm, 244 mm, 246 mm, 248 mm, 250 mm, 252 mm, 254 mm, 256 mm, 258 mm, 260 mm, 262 mm, 264 mm, 266 mm, 268 mm, 270 mm, 272 mm, 274 mm, 276 mm, 278 mm, 280 mm, 282 mm, 284 mm, 286 mm, 288 mm, 290 mm, 292 mm, 294 mm, 296 mm, 298 mm, 300 mm, or the like. If S2 is small, for example, S2<240 mm, there is a risk that the inverter 4 exceeds a surface of the photovoltaic module and is partially suspended or exposed. If S2 is large, for example, S2 > 300 mm, a distance between the junction box 3 and the inverter 4 is increased on the basis that the arrangement position of the junction box 3 is fixed, resulting in a large length of a cable connecting the junction box 3 and the inverter 4, and consequently costs of the connection between the junction box 3 and the inverter 4 are high, or the distance between the junction box 3 and the edge of the laminate 1 is relatively large on the basis that the distance between the junction box 3 and the inverter 4 is fixed, which increases the difficulty of connecting the junction box 3 to the positive and negative bus bars of the laminate 1. Therefore, 240 mm ≤ S2 ≤ 300 mm, so that the distance between the junction box 3 and the inverter 4 is reduced, to reduce the costs of the connection between the junction box 3 and the inverter 4, and the distance between the junction box 3 and the edge of the laminate 1 is reduced, to reduce the difficulty of connecting the junction box 3 to the positive and negative bus bars of the laminate 1.

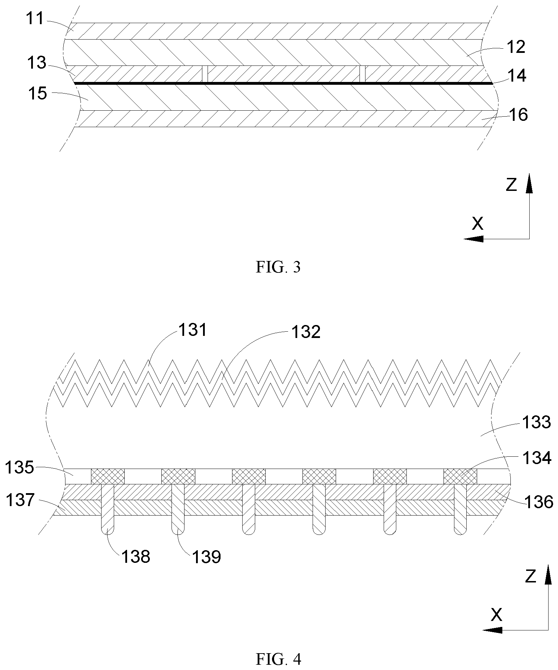

As shown in FIG. 3, a laminate 1 includes a first cover plate 11, a first adhesive film 12, a cell string, a second adhesive film 15, and a second cover plate 16 that are stacked in a thickness direction Z. The cell string includes a plurality of solar cells 13. Adjacent solar cells 13 are connected in series or in parallel by a welding strip 14. In the thickness direction Z of the laminate 1, the first cover plate 11 and the second cover plate 16 are respectively located on two sides of the cell string. For example, the first cover plate 11 is located on a side of the cell string facing the sunlight, the second cover plate 16 is located on a side of the cell string facing away from the sunlight, the first adhesive film 12 is located between the first cover plate 11 and the cell string, and the second adhesive film 15 is located between the second cover plate 16 and the cell string. Both the first cover plate 11 and the second cover plate 16 are glass cover plates, so that the photovoltaic module is a double-glazed module, that is, a back side of the photovoltaic module can also absorb light, thereby facilitating increase in the output power of the photovoltaic module. Alternatively, the first cover plate 11 is a glass cover plate, and the second cover plate 16 is an opaque back sheet, so as to facilitate improvement in structural strength of the second cover plate 16.

The thicknesses of the first cover plate 11 and the second cover plate 16 are not specially limited in the embodiments of the present disclosure. For example, the thickness of the first cover plate 11 may be 2.5 mm, 2.6 mm, 2.7 mm, 2.8 mm, 2.9 mm, 3 mm, 3.1 mm, 3.2 mm, 3.3 mm, 3.4 mm, 3.5 mm, or the like, and the thickness of the second cover plate 16 may be 2.5 mm, 2.6 mm, 2.7 mm, 2.8 mm, 2.9 mm, 3 mm, 3.1 mm, 3.2 mm, 3.3 mm, 3.4 mm, 3.5 mm, or the like. The thicknesses of the first cover plate 11 and the second cover plate 16 may be the same or different.

A structure and a type of the solar cell 13 are not specially limited in the embodiments of the present disclosure. The type of the solar cell 13 includes, but is not limited to, a Back Contact (BC) cell, a Tunnel Oxide Passivated Contact (TOPCon) cell, a Heterojunction with Intrinsic Thin-film (HJT) cell, a Passivated Emitter Rear Cell (PERC), or a perovskite cell.

For a BC cell, for example, an Interdigitated Back Contact (IBC) cell, as shown in FIG. 4, in a thickness direction Z of the cell, the IBC cell sequentially includes a first anti-reflection layer 131, a front surface field region 132, a base 133, an emitter 134, a back surface field region 135, a passivation layer 136, a second anti-reflection layer 137, and first electrodes 138 and second electrodes 139 alternately arranged at intervals. For an IBC cell, a P region and an N region with good uniformity and a precisely controllable junction depth can be obtained by using an ion injection technology, and there is no grid line shielding on a front side of the cell, which can eliminate a light-shielding current loss of a metal electrode, achieve maximum utilization of incident photons, and can increase a short-circuit current by about 7% compared with a conventional solar cell. Due to the back contact structure, there is no need to consider a grid line shielding problem, and a proportion of grid lines can be appropriately increased, thereby reducing series resistance and having a high fill factor. The surface passivation structure and the surface light trapping structure can be designed optimally, so that a low front surface recombination rate and low surface reflection can be obtained.

For a TOPCon cell, in a thickness direction of the cell, the TOPCon cell sequentially includes a metal silver electrode, a front surface silicon nitride passivation layer, a boron-doped emitter, an N-type base silicon layer, a diffusion doped layer, ultra-thin silicon oxide, doped polycrystalline silicon, silicon nitride, and a metal silver electrode. The back side of the cell is composed of a layer of ultra-thin silicon oxide (1 nm to 2 nm) and a layer of phosphorus-doped micro-crystalline amorphous mixed Si film, which jointly form a passivation contact structure. The structure can block the recombination of minority carries, namely, holes, thereby increasing an open-circuit voltage and a short-circuit current of the cell. The ultra-thin oxide layer may allow majority carries, namely, electrons to tunnel into the polycrystalline silicon layer while blocking the recombination of minority carries, namely, holes. The good passivation effect of the ultra-thin silicon oxide and the heavily doped silicon film makes the surface energy band of the silicon wafer bend, thereby forming a field passivation effect. As a result, the probability of electron tunneling is greatly increased, the contact resistance is reduced, and the open circuit voltage and short circuit current of the cell are increased, thereby improving the conversion efficiency of the cell.

For an HJT cell, in a thickness direction of the cell, the HJT cell sequentially includes a front low-temperature silver electrode, a front conductive film, an N-type amorphous silicon film, an intrinsic amorphous silicon film, an N-type base silicon layer, an intrinsic amorphous silicon film, a P-type amorphous silicon film, a back conductive film, and a back low-temperature silver electrode.

For a PERC cell, in a thickness direction of the cell, the PERC cell sequentially includes a metal silver electrode, a front surface silicon nitride passivation layer, a phosphorus emitter, a P-type base silicon layer, a local aluminum back surface field, a metal aluminum back electrode, and a back passivation layer. A passivation film is used for passivation of the back side of the PERC cell, which enhances internal back reflection of light on a silicon base and reduces a recombination rate on the back side, so that the efficiency of the PERC cell is improved.

For a perovskite cell, in a thickness direction of the cell, the perovskite cell sequentially includes a substrate material, a conductive film, an electron transport layer (titanium dioxide), a perovskite absorption layer (hole transport layer), and a metal cathode. The perovskite material has a relatively high light absorption coefficient and a relatively long carrier diffusion distance. After a photo absorbed by the perovskite material is converted into an electron, the electron is easily collected by an electrode and has a relatively small loss. Therefore, relatively high photo-generated voltage and current can be generated, so that the perovskite exhibits a relatively high optical-to-electrical conversion efficiency.

The arrangement quantity of solar cells 13 is not specially limited in the embodiments of the present disclosure. For example, the quantity of solar cells 13 may be 60, 62, 64, 66, 68, 70, 72, 74, 76, 78, 80, 82, 84, 86, 88, 90, 92, 94, 96, 98, 100, 102, 104, 106, 108, 110, 112, 114, 116, 118, 120, or the like.

The laminate 1 includes two first edges arranged opposite to each other in the first direction X and two second edges arranged opposite to each other in the second direction Y For example, the first edge is a long side of the laminate 1, and the second edge is a short side of the laminate 1. A specific structure of the frame 2 is described below by using the frame 2 sleeved on the first edge as an example.

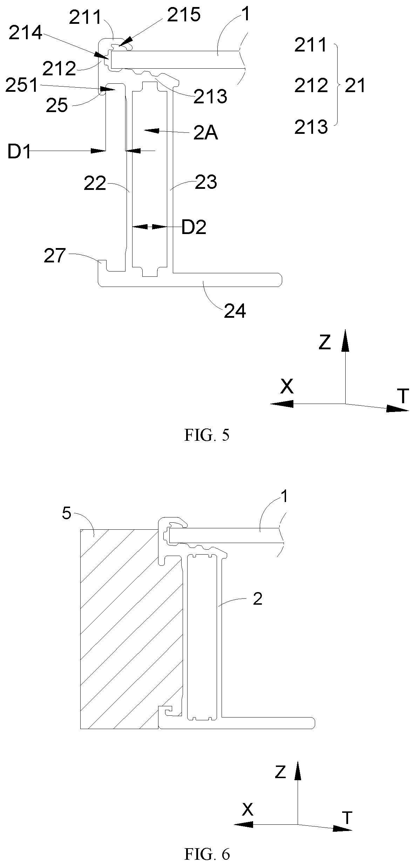

As shown in FIG. 5, a frame 2 includes a clamping part 21 and a support part. The clamping part 21 defines a clamping space 214 for accommodating an edge of a laminate 1. The laminate 1 and the clamping part 21 are bonded and fixed by a structural adhesive, and the support part is connected to the clamping part 21. In addition, in a thickness direction Z of the laminate 1, the support part is located on a side of the laminate 1 facing away from sunlight, that is, the clamping part 21 is located between the laminate 1 and the support part, and the support part is configured to be fixedly connected to a target body, to mount a photovoltaic module on the target body.

A material of the structural adhesive may be a one-component silicone structural adhesive, a two-component silicone structural adhesive, a high-performance silicone structural adhesive, a neutral transparent silicone structural adhesive, an epoxy resin structural adhesive, a polyurethane structural adhesive, an acrylic structural adhesive, a silicone rubber structural adhesive, or a polyamide structural adhesive. The material of the structural adhesive is not specially limited in the embodiments of the present disclosure.

The target body includes, but is not limited to, a ground, a wall, a roof, a colored steel tile, or the like. When the target body is a roof, the photovoltaic module can replace part of a tile, which increases a mounting height of the photovoltaic module, reduces a risk of blocking an adjacent building, and helps extend light exposure duration of the photovoltaic module, thereby helping improve operating stability and output power of the photovoltaic module. In addition, when colors of the photovoltaic module and the tile are similar or the same, overall aesthetics of a building can be improved.

As shown in FIG. 5, the clamping part 21 includes a first part 211, a second part 212, and a third part 213. The first part 211 and the third part 213 are arranged on two sides of the laminate 1 in the thickness direction Z of the laminate 1, that is, the first part 211 is located on a light-receiving surface of the laminate 1, the third part 213 is located on a back surface of the laminate 1, two ends of the second part 212 are respectively connected to the first part 211 and the third part 213, the first part 211, the second part 212, and the third part 213 define a clamping space 214, and the support part is connected to a side of the third part 213 facing away from the laminate 1. The support part includes a first support part 22 and a second support part 23 arranged opposite to each other in the first direction X. The first support part 22 is located on a side of the second support part 23 close to a first edge. As shown in FIG. 5, the first part 211 includes a first end away from the second part 212. That is, in the first direction X, the first end is located on a side of the first part 211 away from the first edge, and the first end is aligned with the first support part 22 in the thickness direction Z of the laminate 1.

The first end is aligned with the first support part 22 in the thickness direction Z of the laminate 1, which can improve overall structural strength of the frame 2, and reduce a risk of deforming the frame 2 when the laminate 1 is pulled up or pressed down, thereby helping improve trampling resistance and wind uplift resistance of the frame 2 and the photovoltaic module, and helping reduce a shielding area of the first part 211 for the laminate 1. In a case that an overall size of the laminate 1 is fixed, the light receiving area of the laminate 1 can be increased, and an arrangement quantity of solar cells 13 in the light receiving area can be increased, thereby helping increase an output power of the photovoltaic module. In a case that the light receiving area of the laminate 1 is fixed, the overall size of the laminate 1 can be reduced, thereby helping increase an arrangement quantity of photovoltaic modules in a limited space.

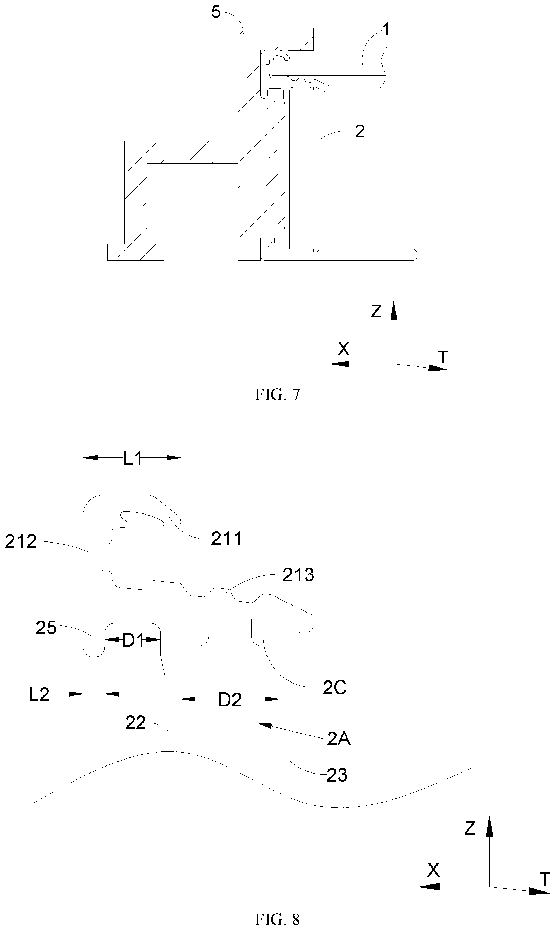

As shown in FIG. 8, a size L1 of the first part 211 in the first direction X satisfies 4 mm ≤ L1 ≤ 7 mm. For example, L1 may be 4 mm, 4.1 mm, 4.3 mm, 4.5 mm, 4.7 mm, 4.9 mm, 5 mm, 5.1 mm, 5.3 mm, 5.5 mm, 5.7 mm, 5.9 mm, 6 mm, 6.1 mm, 6.3 mm, 6.5 mm, 6.7 mm, 6.9 mm, 7 mm, or the like.

If the size of the first part 211 in the first direction X is relatively small, for example, L1 < 4 mm, the structural strength of the first part 211 is relatively weak. When the laminate 1 is pulled up, there is a relatively large risk that the first part 211 bends upward and is deformed under the driving of the laminate 1, resulting in a relatively large risk of damage to the first part 211 and separation of the first part 211 from the laminate 1. If the size of the first part 211 in the first direction X is relatively large, for example, L1 > 7 mm, a shielding area of the laminate 1 by the first part 211 is relatively large. Therefore, the case that 4 mm ≤ L1 ≤ 7 mm can improve the structural strength of the first part 211, prolong the service life of the frame 2, and help improve the stability of the connection between the frame 2 and the laminate 1; and can reduce the shielding area of the laminate 1 by the first part 211, to facilitate improvement in the output power of the photovoltaic module, and help improve the quantity of photovoltaic modules arranged in the limited space.

As shown in FIG. 5, an adhesive overflow groove 215 is provided on a surface of the first part 211 close to the laminate 1, and/or an adhesive overflow groove 215 is provided on a surface of the second part 212 close to the laminate 1, and/or an adhesive overflow groove 215 is provided on a surface of the third part 213 close to the laminate 1. Providing the adhesive overflow grooves 215 can increase the volume of the structural adhesive between the clamping part 21 and the laminate 1, thereby facilitating improvement in stability of the connection between the laminate 1 and the frame 2. During filling of the structural adhesive between the clamping part 21 and the laminate 1, the adhesive overflow grooves 215 can accommodate a part of the structural adhesive, thereby reducing a risk that the structural adhesive overflows the clamping space 214 and shields the light-receiving surface of the laminate 1, and helping improve the aesthetics of the photovoltaic module.

In an embodiment, the surface of the third part 213 close to the laminate 1 may extend horizontally in the first direction X. In this case, the third part 213 may be provided with a plurality of adhesive overflow grooves 215 spaced apart in the first direction X.

In another embodiment, the surface of the third part 213 close to the laminate 1 obliquely extends in a direction facing away from the laminate 1, and the extending direction of the surface of the third part 213 close to the laminate 1 is denoted as a third direction T. In this case, the third part 213 may be provided with a plurality of adhesive overflow grooves 215 spaced apart in the third direction T. In a possible design, the third part 213 is arranged obliquely in the third direction as a whole. In another possible design, the surface of the third part 213 close to the laminate 1 extends obliquely in the third direction T, and a surface of the third part 213 facing away from the laminate 1 extends horizontally in the first direction X. That is, the thickness of the third part 213 gradually decreases.

An angle between the third direction T and the thickness direction Z of the laminate 1 ranges from 90° to 100°. When the angle is 90°, the surface of the third part 213 close to the laminate 1 may extend horizontally in the first direction X. When the angle is greater than 90°, the surface of the third part 213 close to the laminate 1 extends obliquely in the direction facing away from the laminate 1. The angle being less than or equal to 100° reduces a risk that a large volume of structural adhesive is required due to a large inclination angle, thereby reducing bonding costs of the laminate 1 and the frame 2.

When the surface of the third part 213 close to the laminate 1 extends obliquely in the direction facing away from the laminate 1, a mounting process of the photovoltaic module is as follows: The laminate 1 is obliquely inserted into the clamping space 214 from a side surface of the frame 2 in the third direction T, and after the two first edges and/or the two second edges of the laminate 1 are inserted into the clamping space 214, a structural adhesive is injected into the clamping space 214, to implement bonding and fixing between the laminate 1 and the frame 2; after the structural adhesive is cured, the photovoltaic module is trimmed to clean the overflowing structural adhesive, and then the photovoltaic module may be packaged, stored, or transported; and when the photovoltaic module needs to be put into use, the frame 2 is fixed to a pressing block 5 and/or a purlin on the roof, so that the frame 2 is fixed to the target body.

As shown in FIG. 5, the support part further includes a third support part 24 extending in the first direction X. In the thickness direction Z of the laminate 1, the third support part 24 is located on sides of the first support part 22 and the second support part 23 away from the third part 213, and the first support part 22, the third part 213, the second support part 23, and the third support part 24 define a cavity 2A.

In an embodiment, a mounting hole is provided on the third support part 24, and one end of a fastener can pass through the mounting hole and be fixedly connected to the target body, that is, the support part is fixed on the target body by the fastener. In a possible design, in the first direction X, the mounting hole is located between the first support part 22 and the second support part 23, that is, in the thickness direction Z of the laminate 1, the cavity 2A can communicate with the outside through the mounting hole, and a part of the fastener is located in the cavity 2A. In this case, the mounting hole can further serve as a drainage hole, that is, accumulated water in the cavity 2A can drain to the outside through the mounting hole. In another possible design, a part of the third support part 24 is located on a side of the second support part 23 facing away from the first support part 22. In the first direction X, the second support part 23 is located between the first support part 22 and the mounting hole, that is, the second support part 23 is located between the first support part 22 and the fastener, which can increase a mounting space for the fastener and reduce mounting difficulty.

In another embodiment, as shown in FIG. 6 and FIG. 7, a pressing block 5 is fixed on a target body, and in a thickness direction Z of a laminate 1, the pressing block 5 can press and fix a frame 2 on the target body. The frame 2 includes a snap-fit portion, and the snap-fit portion is configured to be in snap-fit with the pressing block 5 in a first direction X, to limit relative movement between the pressing block 5 and the frame 2 in the first direction X, thereby reducing a risk of separation of the pressing block 5 from the frame 2 in the first direction X under an external force, so as to facilitate improvement in stability of the connection between the pressing block 5 and the frame 2.

As shown in FIG. 5, the snap-fit portion includes a first snap-fit portion 25 connected to the clamping part 21. In the first direction X, the first snap-fit portion 25 is located on a side of the clamping part 21 facing away from the second support part 23, that is, in the first direction X, the first support part 22 is located between the first snap-fit portion 25 and the second support part 23. The first snap-fit portion 25 can limit relative movement between the pressing block 5 and the frame 2 in the first direction X, thereby reducing a risk of separation of the pressing block 5 from the frame 2 in the first direction X under an external force, so as to facilitate improvement in stability of the connection between the pressing block 5 and the frame 2.

In an embodiment, as shown in FIG. 5, the first snap-fit portion 25 is located on a side of the clamping part 21 facing away from the sunlight in the thickness direction Z of the laminate 1, the first snap-fit portion 25, the clamping part 21, and the first support part 22 define a first accommodating groove 251, and the first accommodating groove 251 is configured to accommodate a part of the pressing block 5.

The first snap-fit portion 25 is located on the side of the clamping part 21 facing away from the sunlight, so that space on the back surface of the clamping part 21 can be reasonably used, thereby helping reduce an overall size of the frame 2 in the first direction X and in the thickness direction Z of the laminate 1. A part of the pressing block 5 can be snapped into the first accommodating groove 251, which simplifies a snap-fit structure and a snap-fit manner between the pressing block 5 and the frame 2, thereby helping reduce the mounting difficulty of the pressing block 5 and the frame 2.

As shown in FIG. 5 and FIG. 8, a size of the first accommodating groove 251 in the first direction X is D1, a distance between the first support part 22 and the second support part 23 in the first direction X is D2, the relationship between D1 and D2 satisfies 0.75 ≤ D2/D1 ≤ 4, and a ratio of D2 to D1 may be 0.75, 0.8, 0.85, 0.9, 0.95, 1, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2, 2.05, 2.1, 2.15, 2.2, 2.25, 2.3, 2.35, 2.4, 2.45, 2.5, 2.55, 2.6, 2.65, 2.7, 2.75, 2.8, 2.85, 2.9, 2.95, 3, 3.05, 3.1, 3.15, 3.2, 3.25, 3.3, 3.35, 3.4, 3.45, 3.5, 3.55, 3.6, 3.65, 3.7, 3.75, 3.8, 3.85, 3.9, 3.95, 4, or the like.

If the ratio of D2 to D1 is relatively large, for example, D2/D1 > 4, D2 is relatively large and D1 is relatively small. If D2 is relatively large, when the laminate 1 is pressed down, there is a relatively large risk that the third part 213 at the cavity 2A is locally deformed toward the inside of the cavity 2A under the driving of the laminate 1. If D1 is relatively small, a size of a part of the pressing block 5 configured to be inserted into the first accommodating groove 251 is relatively small, so that strength of the pressing block 5 is relatively weak, and there is a risk that the pressing block 5 is damaged by an external force to separate the pressing block 5 from the frame 2. If the ratio of D2 to D1 is relatively small, for example, D2/D1 < 0.75, D2 is relatively small and D1 is relatively large, resulting in weak structural strength of the third part 213 at the first accommodating groove 251. When the laminate 1 is pulled up, there is a relatively large risk that the third part 213 in the first accommodating groove 251 is deformed upward under the driving of the laminate 1, resulting in a relatively large risk of a failure of the connection between the clamping part 21 and the laminate 1. Therefore, the case that 0.75 ≤ D2/D1 ≤ 4 can improve the structural strength of the third part 213 at the cavity 2A and at the first accommodating groove 251, reduce the risk of damage to the frame 2 by an external force, thereby helping prolong the service life of the frame 2, and reduce a risk of a failure of the connection between the frame 2 and the laminate 1, to improve the stability of the connection between the frame 2 and the laminate 1, thereby helping improve the structural strength of the pressing block 5, and helping prolong the service life of the pressing block 5.

The size D1 of the first accommodating groove 251 in the first direction X satisfies: 1.5 mm ≤ D1 ≤ 4 mm, and for example, D1 may be 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, 3.5 mm, 3.6 mm, 3.7 mm, 3.8 mm, 3.9 mm, 4 mm, or the like.

The distance D2 between the first support part 22 and the second support part 23 in the first direction X satisfies: 3 mm ≤ D2 ≤ 6 mm, and for example, D2 may be 3 mm, 3.2 mm, 3.4 mm, 3.6 mm, 3.8 mm, 4 mm, 4.2 mm, 4.4 mm, 4.6 mm, 4.8 mm, 5 mm, 5.2 mm, 5.4 mm, 5.6 mm, 5.8 mm, 6 mm, or the like.

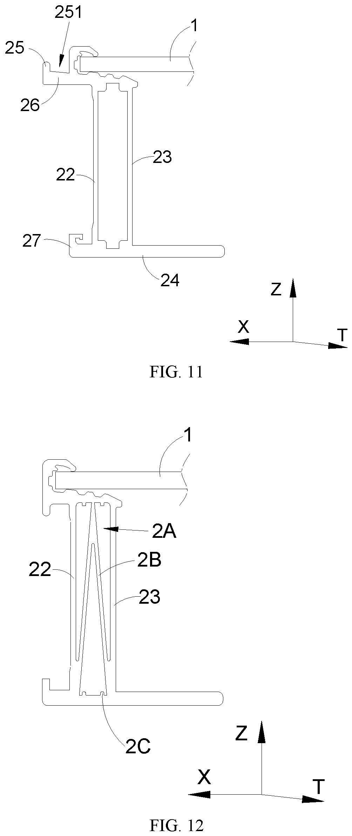

In another embodiment, as shown in FIG. 11, the snap-fit portion further includes a second snap-fit portion 26. The second snap-fit portion 26 is connected to a side of the second part 212 facing away from the laminate 1, and in the first direction X, the second snap-fit portion 26 extends in a direction facing away from the laminate 1. The first snap-fit portion 25 is arranged on a side of the second snap-fit portion 26 away from the second part 212, and the first snap-fit portion 25 is arranged on a side of the second snap-fit portion 26 facing sunlight. The first snap-fit portion 25, the second snap-fit portion 26, and the second part 212 define a first accommodating groove 251. Arranging the first snap-fit portion 25 on a side of the frame 2 facing the light surface can facilitate insertion of the pressing block 5 into the first accommodating groove 251, thereby reducing snap-fit difficulty of the pressing block 5 and the frame 2.

In the foregoing two embodiments, the thickness dimension L2 of the first snap-fit portion 25 in the first direction X satisfies that: 0.5 mm ≤ L2 ≤ 1.5 mm, and for example, L2 may be 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, or the like.

If the thickness of the first snap-fit portion 25 in the first direction X is relatively small, for example, L2 < 0.5 mm, the structural strength of the first snap-fit portion 25 is relatively weak, and there is a risk of deforming or even damaging the first snap-fit portion 25, resulting in a relatively high risk of a failure of snap-fit between the first snap-fit portion 25 and the pressing block 5. If the thickness of the first snap-fit portion 25 in the first direction X is relatively large, for example, L2 > 1.5 mm, an overall weight of the frame 2 is increased. Therefore, the case that 0.5 mm ≤ L2 ≤ 1.5 mm can improve the structural strength of the first snap-fit portion 25 while reducing the weight of the frame 2, to improve stability of the connection between the first snap-fit portion 25 and the pressing block 5.

In any one of the foregoing embodiments, as shown in FIG. 5, the snap-fit portion includes a third snap-fit portion 27 extending in the thickness direction Z of the laminate 1. The third snap-fit portion 27 is connected to the third support part 24. In the first direction X, the third snap-fit portion 27 is located on a side of the third support part 24 facing away from the second support part 23. That is, in the first direction X, the first support part 22 is located between the third snap-fit portion 27 and the second support part 23. In the thickness direction Z of the laminate 1, the third snap-fit portion 27 is located on a side of the third support part 24 facing sunlight, and the third snap-fit portion 27 can limit relative movement between the pressing block 5 and the frame 2 in the first direction X, thereby reducing a risk of separation of the pressing block 5 from the frame 2 in the first direction X under an external force, so as to facilitate improvement in stability of the connection between the pressing block 5 and the frame 2.

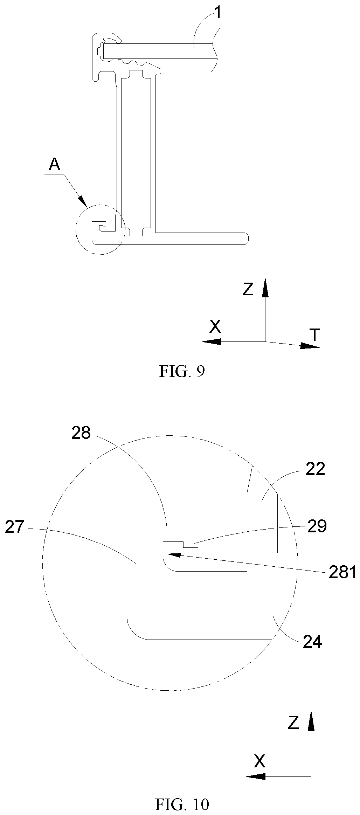

As shown in FIG. 9 and FIG. 10, the snap-fit portion further includes a fourth snap-fit portion 28 extending in the first direction X. The fourth snap-fit portion 28 is located on a side of the third snap-fit portion 27 facing away from the third support part 24 in the thickness direction Z of the laminate 1, the fourth snap-fit portion 28, the third snap-fit portion 27, and the third support part 24 define a second accommodating groove 281, and the second accommodating groove 281 is configured to accommodate a part of the pressing block 5, so that a part of the pressing block 5 can be snapped into the second accommodating groove 281, which simplifies a snap-fit structure and a snap-fit manner between the pressing block 5 and the frame 2, thereby helping reduce the mounting difficulty of the pressing block 5 and the frame 2.

As shown in FIG. 10, a size D3 of the second accommodating groove 281 in the thickness direction Z of the laminate 1 satisfies: 0.5 mm ≤ D3 ≤ 3 mm, and for example, D3 may be 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, or the like.

If the size of the second accommodating groove 281 in the thickness direction Z of the laminate 1 is relatively small, for example, D3 < 0.5 mm, machining difficulty of the second accommodating groove 281 is relatively high, resulting in relatively high machining costs of the frame 2. If the size of the second accommodating groove 281 in the thickness direction Z of the laminate 1 is relatively large, for example, D3 > 3 mm, the material costs of the frame 2 are relatively high. Therefore, the case that 0.5 mm ≤ D3 ≤ 3 mm can reduce machining difficulty of the second accommodating groove 281, and reduce machining costs and material costs of the frame 2.

A size L3 of the fourth snap-fit portion 28 in the first direction X satisfies 0.5 mm ≤ L3 ≤ 3.5 mm, and for example, L3 may be 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, 3.5 mm, or the like.

If the size of the fourth snap-fit portion 28 in the first direction X is relatively small, for example, L3 < 0.5 mm, the structural strength of the fourth snap-fit portion 28 is relatively weak, and there is a risk of deforming or even damaging the fourth snap-fit portion 28, resulting in a relatively high risk of a failure of snap-fit between the fourth snap-fit portion 28 and the pressing block 5. If the size of the fourth snap-fit portion 28 in the first direction X is relatively large, for example, L3 > 3.5 mm, a gap between the fourth snap-fit portion 28 and the first support part 22 is reduced, thereby increasing difficulty in inserting the pressing block 5 into the second accommodating groove 281. Therefore, the case that 0.5 mm ≤ L3 ≤ 3.5 mm can improve the structural strength of the fourth snap-fit portion 28, to improve stability of the connection between the fourth snap-fit portion 28 and the pressing block 5, and can reduce difficulty in inserting the pressing block 5 into the second accommodating groove 281, to simplify a mounting operation of the pressing block 5 and the frame 2.

As shown in FIG. 10, an end of the fourth snap-fit portion 28 away from the third snap-fit portion 27 may be further provided with a fifth snap-fit portion 29. The fifth snap-fit portion 29 extends in the thickness direction Z of the laminate 1, that is, the fifth snap-fit portion 29 can block a part of an opening of the second accommodating groove 281, so as to facilitate further limitation on the pressing block 5 in the second accommodating groove 281, thereby further improving stability of the connection between the pressing block 5 and the frame 2.

In any one of the foregoing embodiments, as shown in FIG. 8 and FIG. 12, a reinforcing rib 2C is arranged on the third part 213 and/or the third support part 24, and the reinforcing rib 2C is located in the cavity 2A, so that a risk that the third part 213 and/or the third support part 24 is deformed toward the inside of the cavity 2A by an external force is reduced, thereby prolonging the service life of the frame 2. In the first direction X, the reinforcing rib 2C may be arranged in the middle of the cavity 2A, or may be arranged at a corner position of the cavity 2A, that is, the reinforcing rib 2C may be arranged at a corner at which the first support part 22 and the third part 213 are connected, and/or the reinforcing rib 2C may be arranged at a corner at which the second support part 23 and the third part 213 are connected, and/or the reinforcing rib 2C may be arranged at a corner at which the second support part 23 and the third support part 24 are connected, and/or the reinforcing rib 2C may be arranged at a corner at which the first support part 22 and the third support part 24 are connected. Parameters such as contour shapes and sizes of adjacent reinforcing ribs 2C may be the same or different. When the reinforcing rib 2C is arranged at a corner, an example in which the reinforcing rib 2C is arranged at the corner at which the first support part 22 and the third part 213 are connected is used. In this case, the reinforcing rib 2C may be connected to the first support part 22 and the third part 213 to serve as an integrated structure, to improve the structural strength.

In any one of the foregoing embodiments, as shown in FIG. 12, at least one reinforcing part 2B may be further arranged in the cavity 2A. The at least one reinforcing part 2B may be parallel to the first support part 22, that is, the at least one reinforcing part 2B extends in the thickness direction Z of the laminate 1. In this case, the first support part 22, the third part 213, the second support part 23, the third support part 24, and the at least one reinforcing part 2B define a structure in the shape of two stacked rectangles or three stacked rectangles. Alternatively, the at least one reinforcing part 2B may be parallel to the third support part 24, that is, the at least one reinforcing part 2B extends in the first direction X. In this case, the first support part 22, the third part 213, the second support part 23, the third support part 24, and the at least one reinforcing part 2B define a structure in the shape of two stacked rectangles or three stacked rectangles. Alternatively, at least two reinforcing parts 2B perpendicular to each other are arranged in the cavity 2A, so that the first support part 22, the third part 213, the second support part 23, the third support part 24, and the at least two reinforcing parts 2B define a structure in the shape of a four-square grid. Alternatively, at least two reinforcing parts 2B that intersect and are not perpendicular to each other are arranged in the cavity 2A, and two adjacent reinforcing parts 2B are connected to form a V-shaped structure or an X-shaped structure. Each of the foregoing descriptions is an example of the structure of the reinforcing parts 2B, and a quantity, arrangement positions, connection positions, shapes, and the like of reinforcing parts 2B are not specifically limited in this embodiment of the present disclosure.

In any one of the foregoing embodiments, a size of the frame 2 in the first direction X ranges from 20 mm to 35 mm, and may be, for example, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, or the like. A frame 2 sleeved on a long side of the laminate 1 is a first frame body 2, and a frame 2 sleeved on a short side of the laminate 1 is a second frame body 2. A size of the first frame body 2 in the first direction X may be the same as or different from a size of the second frame body 2 in the first direction X. Generally, the size of the first part 2 in the first direction X is greater than the size of the second part 2 in the first direction X, to facilitate mounting.

In any one of the foregoing embodiments, a size of the frame 2 in the thickness direction Z of the laminate 1 ranges from 30 mm to 50 mm, and may be, for example, 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, 49 mm, 50 mm, or the like.

In any one of the foregoing embodiments, a size of the photovoltaic module in the first direction X ranges from 900 mm to 1200 mm, and may be, for example, 900 mm, 920 mm, 940 mm, 960 mm, 980 mm, 1000 mm, 1020 mm, 1032 mm, 1035 mm, 1039 mm, 1040 mm, 1060 mm, 1080 mm, 1100 mm, 1120 mm, 1140 mm, 1160 mm, 1180 mm, 1200 mm, or the like. A size of the photovoltaic module in the second direction Y ranges from 1700 mm to 2200 mm, and may be, for example, 1700 mm, 1720 mm, 1740 mm, 1760 mm, 1780 mm, 1787 mm, 1800 mm, 1820 mm, 1840 mm, 1860 mm, 1872 mm, 1880 mm, 1900 mm, 1920 mm, 1940 mm, 1960 mm, 1980 mm, 2000 mm, 2020 mm, 2040 mm, 2047 mm, 2060 mm, 2080 mm, 2100 mm, 2120 mm, 2140 mm, 2160 mm, 2180 mm, 2200 mm, or the like. Sizes of the photovoltaic module in the first direction X and the second direction Y are not specially limited in the embodiments of the present disclosure. When the size of the photovoltaic module in the first direction X is relatively small, the quantity of solar cells 13 that can be arranged in the photovoltaic module in the first direction X is reduced. When the size of the photovoltaic module in the first direction X is relatively large, the quantity of photovoltaic modules arranged in the first direction X in a limited mounting space is reduced, thereby affecting output power of the photovoltaic modules. Similarly, when the size of the photovoltaic module in the second direction Y is relatively small, the quantity of solar cells 13 that can be arranged in the photovoltaic module in the second direction Y is reduced. When the size of the photovoltaic module in the second direction Y is relatively large, the quantity of photovoltaic modules arranged in the second direction Y in a limited mounting space is reduced, thereby affecting output power of the photovoltaic modules. Therefore, the case that the size of the photovoltaic module in the first direction X ranges from 900 mm to 1200 mm and the size of the photovoltaic module in the second direction Y ranges from 1700 mm to 2200 mm can increase the quantities of solar cells 13 arranged in the first direction X and the second direction Y, and help increase the quantities of photovoltaic modules arranged in the first direction X and the second direction Y in the limited mounting space, thereby helping increase total output power of the photovoltaic modules.

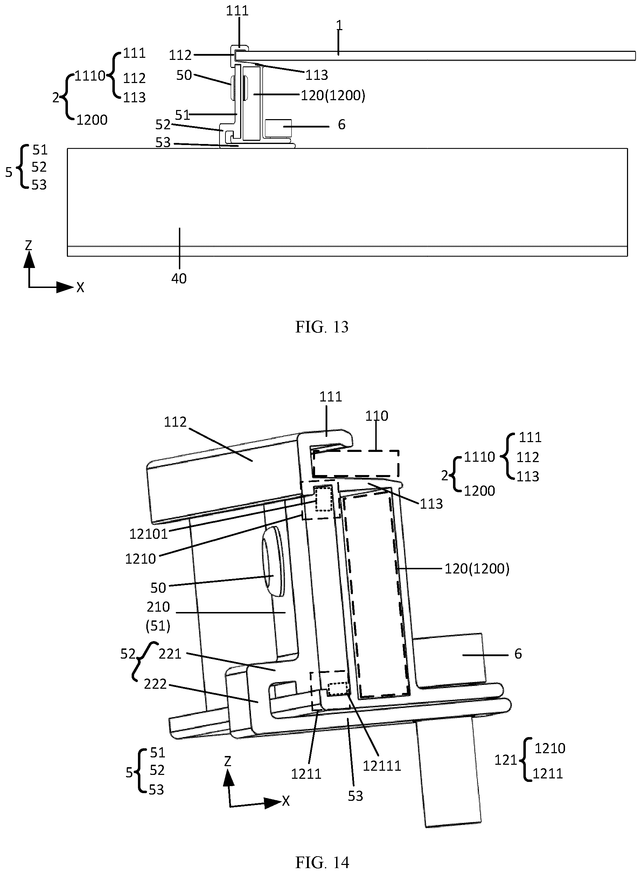

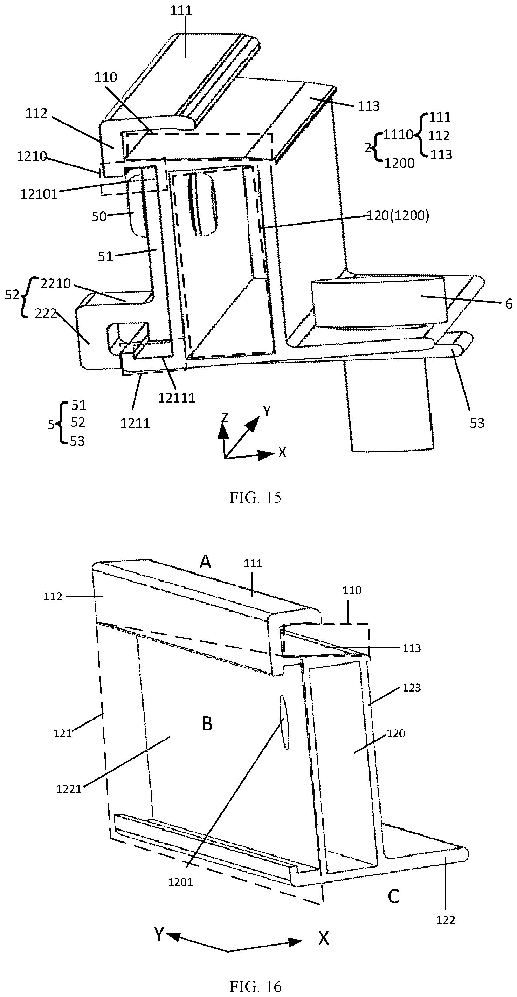

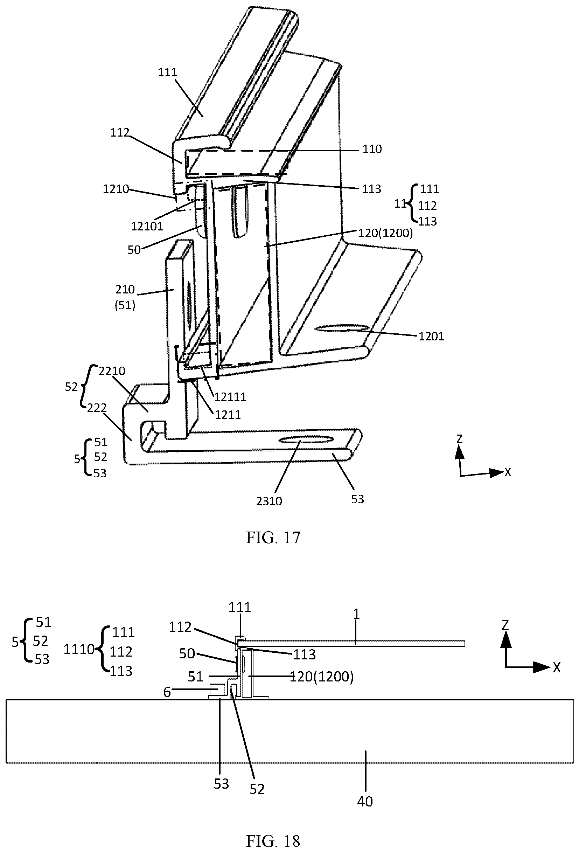

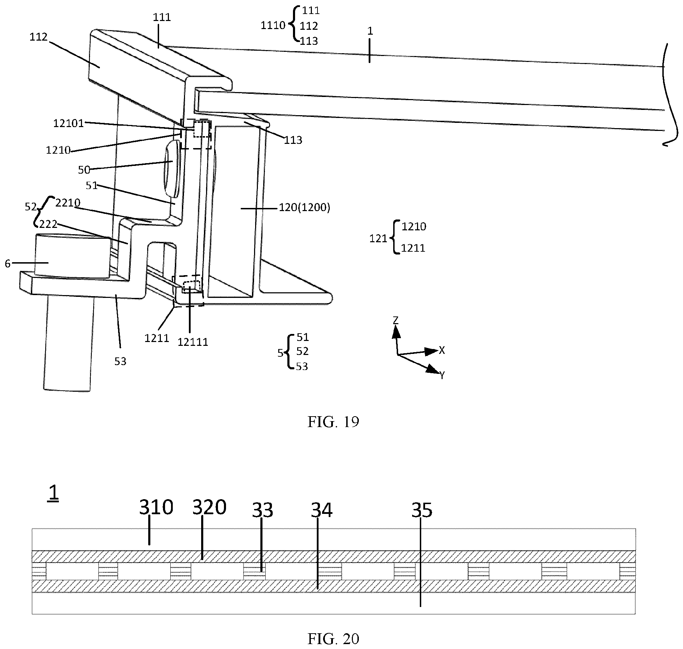

Referring to FIG. 13 to FIG. 20, FIG. 13 is a schematic structural diagram of a photovoltaic module mounting structure according to an embodiment of the present disclosure, FIG. 14 is a schematic diagram of assembling a frame and a pressing block in a direction according to an embodiment of the present disclosure, FIG. 15 is a schematic diagram of assembling a frame and a pressing block in another direction according to an embodiment of the present disclosure, FIG. 16 is a schematic structural diagram of a frame according to an embodiment of the present disclosure, FIG. 17 is an exploded view of a frame and a pressing block according to an embodiment of the present disclosure, FIG. 18 is a schematic structural diagram of another photovoltaic module mounting structure according to an embodiment of the present disclosure, FIG. 19 is a schematic diagram of assembling another frame, a laminate, and a pressing block according to an embodiment of the present disclosure, and FIG. 20 is a schematic structural diagram of a laminate according to an embodiment of the present disclosure. This embodiment provides a photovoltaic module mounting structure, including a frame 2 and a pressing block 5. The frame 2 includes a mounting portion 1110 and a bearing portion 1200 connected to the mounting portion 1110. The mounting portion 1110 is provided with a first snap-fit groove 110 for accommodating a laminate 1. A molding cavity 120 is formed between the bearing portion 1200 and the mounting portion 1110. A snap-fit portion 121 is formed between the bearing portion 1200 and an outer wall surface of the molding cavity 120, and the snap-fit portion 121 and the molding cavity 120 are sequentially arranged in an orientation direction X of an opening in the first snap-fit groove 110. The pressing block 5 includes an insertion portion 51 connected to the snap-fit portion 121, the insertion portion 51 is connected to a fixing portion 53 by a connection portion 52, and the fixing portion 53 is configured to fix a bracket 40.

Specifically, as shown in FIG. 13 to FIG. 20, The photovoltaic module mounting structure includes the frame 2 and the pressing block 5. The frame 2 performs encapsulation around the laminate 1 to protect the laminate 1. In addition, after the laminate 1 is encapsulated by using the frame 2, the frame 2 is pressed against the bracket 40 by using the pressing block 5 subsequently, to smoothly complete fixing of the laminate 1 by using the frame 2, and the bracket 40 can be mounted on a roof or the ground. This is not specifically limited in this embodiment. The pressing block 5 may play a role in fixing the bracket 40, to prevent displacement of the bracket 40, thereby ensuring stable mounting of a photovoltaic module.

The frame 2 may specifically include a surface A, a surface B, and a surface C, where the surface A is a side surface close to the first snap-fit groove 110 for accommodating the laminate 1, the surface A and the surface B may become outer side surfaces of the frame 2, that is, the surface A and the surface B are usually exposed, and the surface C is configured to be attached to and connected to the bracket 40. The frame 2 may be made of a lightweight aluminum alloy material, to reduce a load carried by the bracket 40. In addition, to enable the frame 2 to have sufficient structural strength to better carry the laminate 1, the molding cavity 120 may be designed on the frame 2, and the molding cavity 120 can effectively carry the laminate 1 while reducing use of the material of the frame 2 to reduce costs.

The frame 2 includes a mounting portion 1110 and a bearing portion 1200. The mounting portion 1110 is fixedly connected to the bearing portion 1200. The mounting portion 1110 may be located above the bearing portion 1200. The mounting portion 1110 is provided with a first snap-fit groove 110 for accommodating the laminate 1. The laminate 1 is a component configured to play a role in photovoltaic power generation. The laminate 1 may generate electric energy when being irradiated by sunlight, and then output the electric energy outward to obtain clean energy.

Optionally, the mounting portion 1110 and the bearing portion 1200 may be an integrated structure, which not only can ensure stability of the frame, but also can reduce the assembly time, and subsequently improve assembly efficiency of the frame 2 and the pressing block 5.

It should be noted that still referring to FIG. 20, the laminate 1 includes a front cover plate 310, a first encapsulating adhesive film 320, a cell string 33, a second encapsulating adhesive film 34, and a back cover plate 35 that are stacked. The cell string 33 is formed by connecting a plurality of cells (not shown). The front cover plate 310 may be made of glass, and the back cover plate 35 may be made of glass or a back sheet. Each of the first encapsulating adhesive film 320 and the second encapsulating adhesive film 34 may be an ethylene-vinyl acetate (EVA) adhesive film, a polyolefin elastomer (POE) adhesive film, or a polyethylene terephthalate (PET) adhesive film. EVA (ethylene-vinyl acetate) has advantages such as excellent bonding performance, a low melting temperature, good melt flowability and softness, low costs, and ease of construction. Due to the introduction of the vinyl acetate monomer into the molecular chain of the EVA material, the high degree of crystallization can be reduced, and toughness, impact resistance, filler compatibility, and heat sealing performance can be improved. For POE (random co-polymer elastomer of ethylene and high-carbon α-olefin), due to its molecular structure, the POE material has excellent mechanical properties, rheological properties, and ultraviolet resistance, and further has features such as good affinity with polyolefin, good low-temperature toughness, and a high price-performance ratio. For the polyvinyl butyral (PVB) material, the PVB material is soluble in methanol, ethanol, ketone, alkyl halide, and arene solvents, have good compatibility with phthalate ester, sebacate benzene plasticizer, cellulose nitrate, phenolic resin, epoxy resin, and the like, have high transparency, cold resistance, impact resistance, and ultraviolet radiation resistance, and have good bonding with metal, glass, wood, ceramic, fiber products, and the like. The cell may be a passivated emitter rear cell (PERC), a tunnel oxide passivated contact (TOPCon) cell, a heterojunction with intrinsic thin-film (HJT) cell, an interdigitated back contact (IBC) cell, a perovskite cell, or the like.

A molding cavity 120 is formed between the bearing portion 1200 and the mounting portion 1110, a snap-fit portion 121 is formed between the bearing portion 1200 and an outer wall surface of the molding cavity 120, and the snap-fit portion 121 is configured to connect to the pressing block 5. It may be understood that, the snap-fit portion 121 is located on an outer side of the frame 2. Optionally, the snap-fit portion 121 may be extended in a length direction Y of the molding cavity 120, and the snap-fit portion 121 and the molding cavity 120 are sequentially arranged in the orientation direction X of the opening in the first snap-fit groove 110. The pressing block 5 includes an insertion portion 51. The insertion portion 51 matches the snap-fit portion 121. The insertion portion 51 is located in the snap-fit portion 121. The insertion portion 51 may be placed at a preset position through the snap-fit portion 121. Subsequently, the insertion portion 51 may be directly fixedly connected to the outer side wall of the frame 2. The insertion portion 51 is connected to the fixing portion 53 by the connection portion 52. The connection portion 52 is configured to connect the insertion portion 51 and the fixing portion 53. The connection portion 52 is connected to the bracket 40 by the fixing portion 53. For example, the connection portion 52 is fixedly connected to the bracket 40 by the fixing portion 53.

It can be learned from the foregoing embodiment that, the photovoltaic module mounting structure provided in this embodiment achieves at least the following beneficial effects:

The photovoltaic module mounting structure provided in this embodiment includes a frame 2 and a pressing block 5. The frame 2 includes a mounting portion 1110 and a bearing portion 1200 connected to the mounting portion 1110, and the mounting portion 1110 is provided with a first snap-fit groove 110 for accommodating a laminate 1; a molding cavity 120 is formed between the bearing portion 1200 and the mounting portion 1110, a snap-fit portion 121 is arranged between the bearing portion 1200 and an outer wall surface of the molding cavity 120, and the snap-fit portion 121 and the molding cavity 120 are sequentially arranged in an orientation direction X of an opening in the first snap-fit groove 110; and the pressing block 5 includes an insertion portion 51 connected to the snap-fit portion 121, the insertion portion 51 is connected to a fixing portion 53 by a connection portion 52, and the fixing portion 53 is configured to fix a bracket 40. According to the foregoing solution, through cooperation between the snap-fit portion 121 and the insertion portion 51, the insertion portion 51 can be located in the snap-fit portion 121, so that the pressing block 5 is not easily separated from the frame 2, thereby improving mounting reliability of a photovoltaic module.

In an optional embodiment, as shown in FIG. 14, FIG. 15, and FIG. 16, The mounting portion 1110 includes a top wall 111, a support arm 112, and an inner wall 113, a first snap-fit groove 110 is formed among the top wall 111, the support arm 112, and the inner wall 113, and an opening of the first snap-fit groove 110 faces the laminate 1. The bearing portion 1200 includes an inner wall 113, a first side wall 1221, a bottom wall 122, and a second side wall 123. A molding cavity 120 is formed among the inner wall 113, the first side wall 1221, a part of the bottom wall 122, and the second side wall 123. The snap-fit portion 121 is located on a side of the first side wall 1221 away from the second side wall 123. The insertion portion 51 is subsequently connected to the first side wall 1221 by the snap-fit portion 121, for example, the insertion portion 51 is fixedly connected to the first side wall 1221 by the snap-fit portion 121. It should be noted that the inner wall 113 may be a shared structure of the first snap-fit groove 110 and the molding cavity 120.

Optionally, in a direction Z in which the mounting portion 1110 points to a side of the bearing portion 1200, an orthographic projection of a snap-fit block 210 is located in an orthographic projection of the first snap-fit groove 110, so that the snap-fit block 210 in the pressing block 5 is located below the surface A of the frame 2, to facilitate improvement in power generation of the module.

Optionally, the inner wall 113 is an inclined surface. For example, the inner wall 113 is inclined toward a side away from the first snap-fit groove 110, so that a distance between the top wall 111 and the inner wall 113 can be gradually increased, thereby facilitating insertion of the laminate 1 into the first snap-fit groove 110.

In an optional embodiment, the snap-fit portion 121 includes a first snap-fit member 1210 and a second snap-fit member 1211 arranged opposite to each other, and the first snap-fit member 1210 is located on a side of the second snap-fit member 1211 close to the first snap-fit groove 110; and the insertion portion 51 includes a snap-fit block 210, and the snap-fit block 210 is snapped between the first snap-fit member 1210 and the second snap-fit member 1211.

Specifically, as shown in FIG. 14, FIG. 15, FIG. 16, and FIG. 19, The snap-fit portion 121 includes a first snap-fit member 1210 and a second snap-fit member 1211. The first snap-fit member 1210 and the second snap-fit member 1211 are arranged opposite to each other. The first snap-fit member 1210 is located on a side close to the first snap-fit groove 110, and the second snap-fit member 1211 is located on a side close to the bracket 40. In a direction Z in which the mounting portion 1110 points to a side of the bearing portion 1200, a cross-sectional shape of the first snap-fit member 1210 is approximately an inverted L shape, and a cross-sectional shape of the second snap-fit member 1211 is approximately an L shape. The insertion portion 51 includes a snap-fit block 210. The snap-fit block 210 may be a rectangular plate. The snap-fit block 210 is snapped between the first snap-fit member 1210 and the second snap-fit member 1211. For example, a side of the snap-fit block 210 close to the first snap-fit groove 110 is snapped into the first snap-fit member 1210, and a side of the snap-fit block 210 close to the bracket 40 is snapped into the second snap-fit member 1211. The snap-fit block 210 slides to a preset position through the first snap-fit member 1210 and the second snap-fit member 1211, and the snap-fit block 210 is fixedly connected to the frame 2. Regardless of whether the snap-fit block 210 is pressed down or pulled up, the pressing block 5 is not easily separated from the frame 2. In this embodiment, the snap-fit block 210 only needs to be designed on the surface B.

Optionally, as shown in FIG. 14, FIG. 15, FIG. 16, and FIG. 19, both the first snap-fit member 1210 and the second snap-fit member 1211 may run through the snap-fit portion 121 in the length direction Y of the molding cavity 120. During subsequent assembly, the snap-fit block 210 may reciprocate between the first snap-fit member 1210 and the second snap-fit member 1211 in the length direction Y of the molding cavity 120, and the snap-fit block 210 is fixed to the outer side wall of the frame 2 according to a preset position between the pressing block 5 and the frame 2. By using this solution, it is convenient to assemble the pressing block 5 on the frame 2, the operation is convenient, and disassembly and assembly are convenient and fast. Specifically, because both the first snap-fit member 1210 and the second snap-fit member 1211 can run through the snap-fit portion 121 in the length direction Y of the molding cavity 120, the snap-fit block 210 can slide to the preset position through the first snap-fit member 1210 and the second snap-fit member 1211, which not only can improve the convenience of assembling the pressing block 5 and the frame 2, but also can greatly reduce the time for assembling the pressing block 5 on the frame 2.

In an optional embodiment, as shown in FIG. 14, FIG. 15, and FIG. 19, a second snap-fit groove 12101 is provided on the first snap-fit member 1210. The second snap-fit groove 12101 is recessed toward a side close to the first snap-fit groove 110. The second snap-fit groove 12101 may run through the first snap-fit member 1210 in the length direction Y of the molding cavity 120. A third snap-fit groove 12111 is provided on the second snap-fit member 1211. The third snap-fit groove 12111 is recessed toward a side away from the first snap-fit groove 110. The third snap-fit groove 12111 may run through the second snap-fit member 1211 in the length direction Y of the molding cavity 120. The second snap-fit groove 12101 and the third snap-fit groove 12111 are arranged opposite to each other. Optionally, the first snap-fit groove 110 and the third snap-fit groove 12111 are arranged in mirror symmetry. For example, in a direction Z in which the mounting portion 1110 points to a side of the bearing portion 1200, a cross-sectional shape of the first snap-fit groove 110 is an inverted L shape, and a cross-sectional shape of the second snap-fit groove 12101 is an L shape. Two ends of the snap-fit block 210 are respectively snapped into the second snap-fit groove 12101 and the third snap-fit groove 12111. For example, the snap-fit block 210 has one end snapped into the second snap-fit groove 12101 and the other end snapped into the third snap-fit groove 12111. The snap-fit block 210 is easily inserted into the first snap-fit member 1210 and the second snap-fit member 1211 through the second snap-fit groove 12101 and the third snap-fit groove 12111. The snap-fit block 210 may reciprocate between the second snap-fit groove 12101 and the third snap-fit groove 12111, and the snap-fit block 210 is directly fixed on the outer side wall of the frame 2 according to a preset position between the pressing block 5 and the frame 2.

During specific use, the snap-fit block 210 is inserted between the first snap-fit groove 110 and the second snap-fit groove 12101, the snap-fit block 210 is slid to a preset position between the pressing block 5 and the frame 2, and the snap-fit block 210 is connected to the frame 2, and is fixedly connected to the bracket 40 through the fixing portion 53.

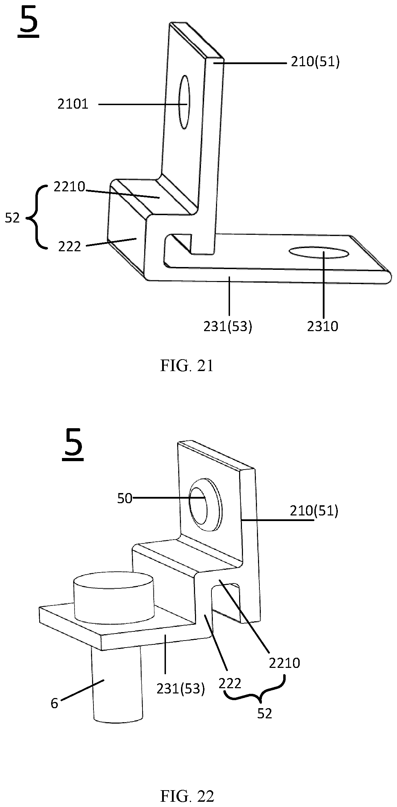

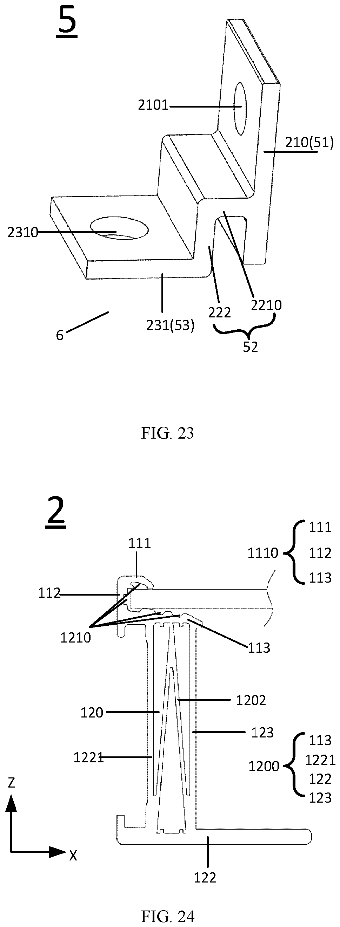

In an optional embodiment, as shown in FIG. 14, FIG. 19, FIG. 21, FIG. 22, and FIG. 23, FIG. 21 is a schematic structural diagram of a pressing block according to an embodiment of the present disclosure, FIG. 22 is a schematic structural diagram of another pressing block according to an embodiment of the present disclosure, FIG. 23 is a schematic structural diagram of hiding a first connection member and a second connection member in another pressing block according to an embodiment of the present disclosure. In this embodiment, a first hole 2101 is provided on the snap-fit block 210, and the first hole 2101 runs through the snap-fit block 210 in the orientation direction X of the opening in the first snap-fit groove 110. A second hole 1201 corresponding to the first hole 2101 is provided on an outer side wall of the molding cavity 120, and the second hole 1201 runs through the outer side wall of the molding cavity 120 in the orientation direction X of the opening in the first snap-fit groove 110. The first hole 2101 and the second hole 1201 may both be circular holes. Designing the first hole 2101 and the second hole 1201 as circular holes is convenient for manufacturing. Certainly, according to an actual situation, the first hole 2101 may alternatively be designed into another shape. This is not specifically limited in this embodiment. The snap-fit block 210 is connected to the outer side wall of the molding cavity 120 by the first connection member 50. For example, the snap-fit block 210 is fixedly connected to the outer side wall of the molding cavity 120 by the first connection member 50. The first connection member 50 may be a fastener, and the fastener may be a rivet. During subsequent assembly, the rivet is sequentially passed through the first hole 2101 and the second hole 1201, to fixedly connect the snap-fit block 210 to the outer side wall of the molding cavity 120. An overall mounting process is convenient and fast.

In an optional embodiment, as shown in FIG. 14, FIG. 15, and FIG. 19, the connection portion 52 is located on a side of the snap-fit block 210 away from the first snap-fit groove 110. The connection portion 52 may be located in a lower middle part of the snap-fit block 210 away from the molding cavity 120. In a direction Z in which the mounting portion 1110 points to a side of the bearing portion 1200, a cross-sectional shape of the connection portion 52 is an inverted L shape. By using the foregoing solution, use of the material for the connection portion 52 can be reduced, to reduce costs, and the connection to the fixing portion 53 is facilitated.

Optionally, still referring to FIG. 14, FIG. 15, and FIG. 19, The snap-fit block 210 is connected to the outer side wall of the molding cavity 120 by the first connection member 50. In the orientation direction X of the opening in the first snap-fit groove 110, an orthographic projection of the first connection member 50 does not overlap with an orthographic projection of the connection portion 52. During subsequent assembly, regardless of whether the snap-fit block 210 is pressed down or pulled up, the pressing block 5 is not easily separated from the frame 2, and fixing the snap-fit block 210 and the frame 2 together by using the connection member 50 is not affected, thereby improving the reliability of the connection between the pressing block 5 and the frame 2.

Optionally, with reference to FIG. 13 and FIG. 16, in a direction Z in which the mounting portion 1110 points to a side of the bearing portion 1200, a side of the support arm 112 away from the first snap-fit groove 110 is flush with a side of the first connection member 50 away from the molding cavity 120. Subsequently, after being inserted into the first snap-fit member 1210 and the second snap-fit member 1211, the snap-fit block 210 is slid to a preset position between the snap-fit block 210 and the first side wall 1221, thereby preventing the first connection member 50 and the snap-fit portion 121 from occupying excessive space of the frame 2, and facilitating assembly among the pressing block 5, the frame 2, and the bracket 40.

In an optional embodiment, still referring to FIG. 13, FIG. 14, and FIG. 15, in this embodiment, in a direction Z in which the mounting portion 1110 points to a side of the bearing portion 1200, each of an orthographic projection of the connection portion 52, an orthographic projection of the snap-fit block 210, and an orthographic projection of a part of the laminate 1 overlaps with an orthographic projection of the fixing portion 53. Specifically, the fixing portion 53 may alternatively be a rectangular plate. A side of the fixing portion 53 close to the bracket 40 may be in direct contact with a side of the bracket 40 close to the fixing portion 53. The fixing portion 53 may be located below the bottom wall of the molding cavity 120. During subsequent assembly, the bottom wall of the frame 2, the fixing portion 53, and the bracket 40 are fixed together, and a position where the pressing block 5 and the frame 2 are fixed is on a side of the bottom wall of the frame 2 away from the outer side wall of the frame 2, which can reduce an interval space between adjacent laminates 1, thereby reducing a mounting gap between adjacent photovoltaic modules, and can further ensure that the pressing block 5 surrounds and fixes three surfaces (such as the outer side wall, the bottom wall, and the inner side wall) of the frame 2, thereby more effectively improving mounting reliability of the photovoltaic modules.

In an optional embodiment, as shown in FIG. 14, FIG. 15, and FIG. 21, the connection portion 52 includes a transverse plate 2210 and a longitudinal plate 222 connected to the transverse plate 2210. For example, a side of the transverse plate 2210 away from the molding cavity 120 is fixedly connected to a side of the longitudinal plate 222 close to the transverse plate 2210. The transverse plate 2210 and the longitudinal plate 222 may both be rectangular plates. Specifically, both the transverse plate 2210 and the longitudinal plate 222 may be strip-shaped rectangular plates. An inverted L-shaped structure is formed between the transverse plate 2210 and the longitudinal plate 222. The transverse plate 2210 is connected to a side of the snap-fit block 210 away from the molding cavity 120, and the longitudinal plate 222 is connected to an end of the fixing portion 53. For example, a side of the transverse plate 2210 close to the molding cavity 120 is fixedly connected to a side of the snap-fit block 210 away from the molding cavity 120, a side of the longitudinal plate 222 away from the transverse plate 2210 is fixedly connected to a side of the fixing portion 53 close to the longitudinal plate 222, the fixing portion 53 extends toward a side close to the bottom wall of the molding cavity 120, the snap-fit block 210 is snapped to the outer side wall of the frame 2, the fixing portion 53 is located on the bottom wall of the frame 2, and subsequently the second connection member 6 is arranged on the inner side wall of the frame 2, thereby ensuring that the pressing block 5 surrounds and fixes three surfaces (for example, the outer side wall, the bottom wall, and the inner side wall) of the frame 2.

Optionally, still referring to FIG. 14, FIG. 15, and FIG. 21, an L-shaped structure is formed between the longitudinal plate 222 and the fixing portion 53. Because an inverted L-shaped structure is formed between the transverse plate 2210 and the longitudinal plate 222, the snap-fit block 210 is in contact with the outer side wall of the frame 2, and the L-shaped structure is designed between the longitudinal plate 222 and the fixing portion 53, it is ensured that the fixing portion 53 surrounds the bottom wall of the frame 2, and it is subsequently ensured that the bottom wall of the frame 2 is fixedly connected to the bracket 40 by the fixing portion 53.

In an optional embodiment, as shown in FIG. 18, FIG. 19, FIG. 21, and FIG. 22, in a direction Z in which the mounting portion 1110 points to a side of the bearing portion 1200, none of an orthographic projection of the insertion portion 51, an orthographic projection of the connection portion 52, and an orthographic projection of the laminate 1 overlaps with an orthographic projection of the fixing portion 53. With this solution, there is no need to additionally provide a hole on the bottom wall of the frame 2, thereby saving one process. Subsequently, the fixing portion 53 is directly fixedly connected to the bracket 40. Because the orthographic projection of the laminate 1 does not overlap with the orthographic projection of the fixing portion 53 in a direction Z in which the mounting portion 1110 points to a side of the bearing portion 1200, it is convenient to assemble the fixing portion 53 and the bracket 40.

In an optional embodiment, as shown in FIG. 19, FIG. 21, and FIG. 22, the connection portion 52 includes a transverse plate 2210 and a longitudinal plate 222 connected to the transverse plate 2210. For example, a side of the transverse plate 2210 away from the molding cavity 120 is fixedly connected to a side of the longitudinal plate 222 close to the transverse plate 2210. The transverse plate 2210 and the longitudinal plate 222 may both be rectangular plates. Specifically, both the transverse plate 2210 and the longitudinal plate 222 may be strip-shaped rectangular plates. An inverted L-shaped structure is formed between the transverse plate 2210 and the longitudinal plate 222. The transverse plate 2210 is connected to a side of the snap-fit block 210 away from the molding cavity 120. For example, a side of the transverse plate 2210 close to the molding cavity 120 is fixedly connected to a side of the snap-fit block 210 away from the molding cavity 120, the longitudinal plate 222 is connected to a side of the fixing portion 53 close to the molding cavity 120, a side of the longitudinal plate 222 away from the transverse plate 2210 is fixedly connected to a side of the fixing portion 53 close to the longitudinal plate 222, and the fixing portion 53 is extended toward a side away from the bottom wall of the molding cavity 120. The fixing portion 53 extending toward a side away from the bottom wall of the molding cavity 120 effectively prevents the mounting portion 1110 and the bearing portion 1200 from blocking the fixing portion 53, and subsequently facilitates direct assembly of the fixing portion 53 and the bracket 40 together.

In an optional embodiment, the fixing portion 53 includes a fixing block 231. The fixing block 231 may also be a rectangular plate. The fixing block 231 is in direct contact with the bracket 40. Designing the fixing block 231 as a rectangular plate helps increase a contact area between the fixing portion 53 and the bracket 40. A third hole 2310 is provided on the fixing block 231. The third hole 2310 penetrates in a direction Z in which the mounting portion 1110 points to a side of the bearing portion 1200. The third hole 2310 may be a circular hole. The third hole 2310 is designed as a circular hole to facilitate machining. The fixing block 231 is connected to the bracket 40 by a second connection member 6. The second connection member 6 may be a fastener kit, such as a bolt kit. The bolt kit includes a bolt and a nut connected to the bolt. The bolt may be an M8 bolt. The bolt may alternatively be selected according to an actual situation. This is not specifically limited in this embodiment. During subsequent assembly, the bolt is passed through the third hole 2310 of the fixing block 231 and the fourth hole on the bracket 40 and then the nut (not shown) is screwed onto the bolt, to implement assembly between the fixing block 231 and the bracket 40. An overall mounting process is convenient and fast.

Optionally, as shown in FIG. 21 to FIG. 23, The snap-fit block 210, the connection portion 52, and the fixing portion 53 may be an integrated structure, which can improve stability of the pressing block 5, and can reduce the time of assembly between the pressing block 5 and the frame 2. Subsequently, the pressing block 5 may be directly assembled on the snap-fit portion 121 of the frame 2.

In an optional embodiment, referring to FIG. 24, FIG. 24 is a schematic structural diagram of another frame according to an embodiment of the present disclosure. The mounting portion 1110 includes a top wall 111, a support arm 112, and an inner wall 113, a first snap-fit groove 110 is formed among the top wall 111, the support arm 112, and the inner wall 113, and an opening of the first snap-fit groove 110 faces the laminate 1. The bearing portion 1200 includes an inner wall 113, a first side wall 1221, a bottom wall 122, and a second side wall 123. A molding cavity 120 is formed among the inner wall 113, the first side wall 1221, a part of the bottom wall 122, and the second side wall 123. A side of each of the top wall 111, the support arm 112, and the inner wall 113 close to the first snap-fit groove 110 is provided with an adhesive overflow groove 1210. After the laminate 1 is inserted into the first snap-fit groove 110, the adhesive overflow groove 1210 may accommodate glue or another binding agent for bonding during subsequent mounting and use, to ensure that the laminate 1 is firmly mounted to the mounting portion 1110. The quantity of adhesive overflow grooves 1210 may be increased or decreased according to an actual situation. When there are a plurality of adhesive overflow grooves 1210, a distance between the plurality of adhesive overflow grooves 1210 may be adjusted according to an actual situation. This is not specifically limited in this embodiment. The shape of the adhesive overflow groove 1210 may be a semicircle, a trapezoid, a sector, a rectangle, or the like, and may be adjusted according to an actual situation. This is not specifically limited in this embodiment.

Optionally, still referring to FIG. 24, a reinforcing member 1202 is arranged in the molding cavity 120. The reinforcing member 1202 may improve structural stability of the molding cavity 120 and overall strength of the frame 2, thereby improving overall strength of the photovoltaic module mounting structure.

Optionally, still referring to FIG. 24, in a direction Z in which the mounting portion 1110 points to a side of the bearing portion 1200, a cross-sectional shape of the reinforcing member 1202 may be an inverted V shape. The molding cavity 120 is divided into three small cavities. Subsequently, corner braces (not shown) are inserted into different small cavities respectively, to more effectively improve overall strength of the frame 2. Certainly, according to an actual situation, the shape of the reinforcing member 1202 may alternatively be another shape. Provided that the overall strength of the frame 2 can be improved, the shape is not specifically limited in this embodiment.

It can be learned from the foregoing embodiments that, the photovoltaic module mounting structure provided in the present disclosure achieves at least the following beneficial effects.

The photovoltaic module mounting structure provided by the embodiments of the present disclosure includes a frame and a pressing block. The frame includes a mounting portion and a bearing portion connected to the mounting portion, and the mounting portion is provided with a first snap-fit groove for accommodating a laminate. A molding cavity is formed between the bearing portion and the mounting portion, a snap-fit portion is formed between the bearing portion and an outer wall surface of the molding cavity, and the snap-fit portion and the molding cavity are sequentially arranged in an orientation direction of an opening in the first snap-fit groove. The pressing block includes an insertion portion connected to the snap-fit portion, the insertion portion is connected to a fixing portion by a connection portion, and the fixing portion is configured to fix a bracket. According to the foregoing solution, through cooperation between the snap-fit portion and the insertion portion, the insertion portion can be located in the snap-fit portion, so that the pressing block is not easily separated from the frame, thereby improving mounting reliability of a photovoltaic module.

A photovoltaic module is usually encapsulated by using a photovoltaic frame. The service life of the photovoltaic module is mainly affected by the service life of a material of the photovoltaic frame, an encapsulating process of the photovoltaic frame, and a use environment. The photovoltaic frame mainly includes a frame body, a corner brace, a pressing block, and the like. The frame body refers to a fixing frame of a photovoltaic laminate, and the corner brace is configured to connect two photovoltaic frames to each other.

During assembly of the frame body and the corner brace, due to different structures of the frame body, the corner brace and the frame body cannot be completely matched, and the corner brace and the part are prone to misplacement, resulting in inconvenient mounting or difficult assembly of the photovoltaic module. During use of the photovoltaic module, a risk that the frame body is separated from the corner brace is prone to occur, resulting in a decline in use stability of the photovoltaic module.

It can be learned from the above that, during use of the photovoltaic module, a risk that the part is separated from the corner brace is prone to occur, resulting in a problem of a decline in use stability of the photovoltaic module.

A photovoltaic module provided in an embodiment of the present disclosure includes a frame body and a corner brace. A bottom edge portion, a first side edge portion, a bearing portion, and a second side edge portion of the frame body are sequentially connected to define a corner brace cavity. The corner brace includes two connection portions connected in an L shape, each connection portion includes a first connection sub-plate and a second connection sub-plate that are parallel to each other, and a clearance groove is formed between the first connection sub-plate and the second connection sub-plate. One of the first connection sub-plate and the second connection sub-plate of the corner brace is arranged in the corner brace cavity, and the other of the first connection sub-plate and the second connection sub-plate is arranged outside the corner brace cavity. In this way, friction may be generated between each of a surface of the first side edge portion facing the corner brace cavity and a surface of the second side edge portion facing the corner brace cavity and a connection portion of the corner brace. In addition, when the first side edge portion is located in the clearance groove, friction may be generated between a surface of the first side edge portion away from the second side edge portion and the first connection sub-plate, or when the second side edge portion is located in the clearance groove, friction may be generated between a surface of the second side edge portion away from the first side edge portion and the second connection sub-plate. That is, when the corner brace is assembled into the corner brace cavity, at least three contact surfaces between the corner brace and the frame body may generate friction. Compared with a case that the connection portion is entirely disposed in the corner brace cavity, at least one contact surface is added between the corner brace and the frame body, which helps improve assembly stability of the corner brace and the frame body. During use of the photovoltaic module, a problem of size deviation may occur in the first connection sub-plate or the second connection sub-plate located in the corner brace cavity due to wear and tear, resulting in a decline in mounting stability of the first connection sub-plate or the second connection sub-plate in the corner brace cavity. However, because the clearance groove of the corner brace restricts movement of the first side edge portion or the second side edge portion, the clearance groove may compensate for the size deviation of the first connection sub-plate or the second connection sub-plate, and stabilize a relative position between the corner brace and the frame body, to further avoid a problem that the corner brace and the frame body fall off directly, thereby helping improve use stability of the photovoltaic module.

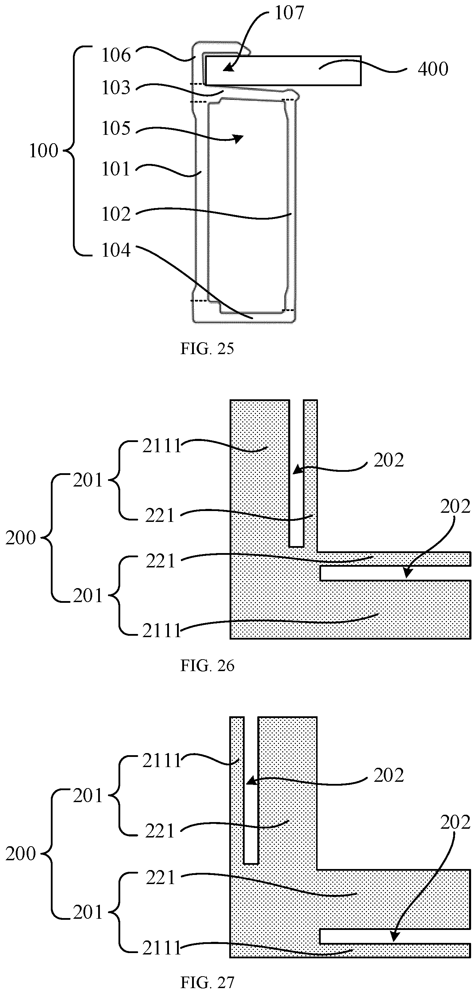

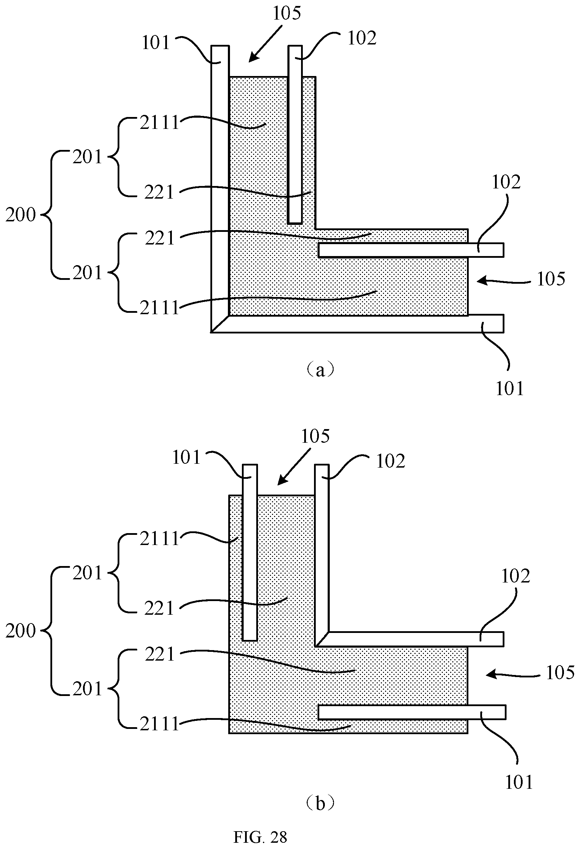

FIG. 25 is a schematic structural diagram of a first type of frame body according to an embodiment of the present disclosure, FIG. 26 is a top view of a corner brace according to an embodiment of the present disclosure, FIG. 27 is a top view of another corner brace according to an embodiment of the present disclosure, and FIG. 28 is a schematic cross-sectional view in a horizontal direction when two types of frame bodies and corner braces are assembled according to an embodiment of the present disclosure.

Referring to FIG. 25, the photovoltaic module includes a frame body 100. The frame body 100 includes: a middle portion 103, a first side edge portion 101, a second side edge portion 102, and a bottom edge portion 104. The middle portion 103 and the bottom edge portion 104 both extend in a horizontal direction and the middle portion 103 is located above the bottom edge portion 104. The first side edge portion 101 and the second side edge portion 102 both extend in a vertical direction and the first side edge portion 101 and the second side edge portion 102 are both located between the middle portion 103 and the bottom edge portion 104. The bottom edge portion 104, the first side edge portion 101, the middle portion 103, and the second side edge portion 102 are sequentially connected to define a corner brace cavity 105. Referring to FIG. 26 and FIG. 27, the photovoltaic module further includes: a corner brace 200. The corner brace 200 includes two connection portions 201 connected in an L shape, each connection portion 201 includes a first connection sub-plate 211 and a second connection sub-plate 221 that are parallel to each other, and a clearance groove 202 is formed between the first connection sub-plate 211 and the second connection sub-plate 221. Referring to (a) in FIG. 28, the first connection sub-plate 211 may be located in the corner brace cavity 105, the second side edge portion 102 is located in the clearance groove 202, and the second connection sub-plate 221 is located on a side of the second side edge portion 102 away from the first side edge portion 101. Referring to (b) in FIG. 28, the second connection sub-plate 221 is located in the corner brace cavity 105, the first side edge portion 101 is located in the clearance groove 202, and the first connection sub-plate 211 is located on a side of the first side edge portion 101 away from the second side edge portion 102.

The photovoltaic module provided in the embodiments of the present disclosure includes a frame body 100 and a corner brace 200. A bottom edge portion 104, a first side edge portion 101, a middle portion 103, and a second side edge portion 102 of the frame body 100 are sequentially connected to define a corner brace cavity 105. The corner brace 200 includes two connection portions 201 connected in an L shape, each connection portion 201 includes a first connection sub-plate 211 and a second connection sub-plate 221 that are parallel to each other, and a clearance groove 202 is formed between the first connection sub-plate 211 and the second connection sub-plate 221. One of the first connection sub-plate 211 and the second connection sub-plate 221 of the corner brace 200 is arranged in the corner brace cavity 105, and the other of the first connection sub-plate 211 and the second connection sub-plate 221 is arranged outside the corner brace cavity 105. In this way, friction may be generated between each of a surface of the first side edge portion 101 facing the corner brace cavity 105 and a surface of the second side edge portion 102 facing the corner brace cavity 105 and a connection portion 201 of the corner brace 200. In addition, referring to (a) in FIG. 28, when the first side edge portion 101 is located in the clearance groove 202, friction may be generated between a surface of the first side edge portion 101 away from the second side edge portion 102 and the first connection sub-plate 211, or referring to (b) in FIG. 28, when the second side edge portion 102 is located in the clearance groove 202, friction may be generated between a surface of the second side edge portion 102 away from the first side edge portion 101 and the second connection sub-plate 221. That is, when the corner brace 200 is assembled into the corner brace cavity 105, at least three contact surfaces between the corner brace 200 and the frame body may generate friction 100. Compared with a case that the connection portion 201 is entirely disposed in the corner brace cavity 105, at least one contact surface is added between the corner brace 200 and the frame body 100, which helps improve assembly stability of the corner brace 200 and the frame body 100. During use of the photovoltaic module, a problem of size deviation may occur in the first connection sub-plate 211 or the second connection sub-plate 221 located in the corner brace cavity 105 due to wear and tear, resulting in a decline in mounting stability of the first connection sub-plate 211 or the second connection sub-plate 221 in the corner brace cavity 105. However, because the clearance groove 202 of the corner brace 200 restricts movement of the first side edge portion 101 or the second side edge portion 102, the clearance groove 202 may compensate for the size deviation of the first connection sub-plate 211 or the second connection sub-plate 221, and stabilize a relative position between the corner brace 200 and the frame body 100, to further avoid a problem that the corner brace 200 and the frame body 100 fall off directly, thereby helping improve use stability of the photovoltaic module.

In some embodiments, a width of the clearance groove 202 may be less than or equal to a thickness of the first side edge portion 101. In this way, referring to (b) in FIG. 28, when the second connection sub-plate 221 is located in the corner brace cavity 105, the first side edge portion 101 may be exactly located in the clearance groove 202, and the clearance groove 202 may generate a clamping force on the first side edge portion 101, to help improve assembly stability of the frame body 100 and the corner brace 200, thereby helping improve use stability of the photovoltaic module.

In some embodiments, a width of the clearance groove 202 may be less than or equal to a thickness of the second side edge portion 102. In this way, referring to (a) in FIG. 28, when the first connection sub-plate 211 is located in the corner brace cavity 105, the second side edge portion 102 may be exactly located in the clearance groove 202, and the clearance groove 202 may generate a clamping force on the second side edge portion 102, to help improve assembly stability of the frame body 100 and the corner brace 200, thereby helping improve use stability of the photovoltaic module.

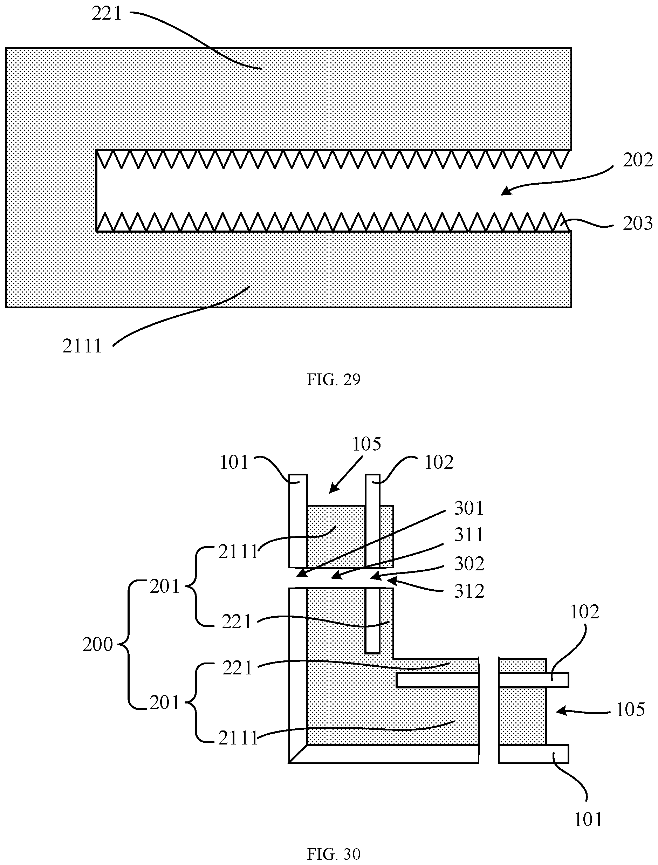

FIG. 29 is a schematic diagram of a partially enlarged structure of a clearance groove according to an embodiment of the present disclosure.

In some embodiments, referring to FIG. 29, a surface of the first connection sub-plate 211 and/or a surface of the second connection sub-plate 221 facing the clearance groove 202 may have a snap-fit structure 203. In this way, when the first side edge portion 101 is arranged in the clearance groove 202, friction between the first side edge portion 101 and the first connection sub-plate 211 and/or the second connection sub-plate 221 may be increased, thereby helping improve assembly stability between the frame body 100 and the corner brace 200, and further helping improve use stability of the photovoltaic module. Alternatively, when the second side edge portion 102 is arranged in the clearance groove 202, friction between the second side edge portion 102 and the first connection sub-plate 211 or the second connection sub-plate 221 may be increased, thereby helping improve assembly stability between the frame body 100 and the corner brace 200, and further helping improve use stability of the photovoltaic module.

For example, the snap-fit structure 203 may be a plurality of sequentially arranged sawtooth-shaped structures shown in FIG. 29, or the snap-fit structure is a plurality of protruding structures in another shape.

In FIG. 29, an example in which each of a surface of the first connection sub-plate 211 facing the clearance groove 202 and a surface of the second connection sub-plate 221 facing the clearance groove 202 has a snap-fit structure 203 is used. In some embodiments, a snap-fit structure 203 may be arranged only on the surface of the first connection sub-plate 211 facing the clearance groove 202, or a snap-fit structure 203 may be arranged only on the surface of the second connection sub-plate 221 facing the clearance groove 202.

In some embodiments, when the first connection sub-plate is arranged in the corner brace cavity, a surface of the first connection sub-plate away from the second connection sub-plate may also have a snap-fit structure. In this way, friction between the first connection sub-plate and the inner wall of the corner brace cavity can be increased, thereby helping improve assembly stability between the frame body and the corner brace, and further helping improve use stability of the photovoltaic module.

In some embodiments, when the second connection sub-plate is arranged in the corner brace cavity, a surface of the second connection sub-plate away from the first connection sub-plate may also have a snap-fit structure. In this way, friction between the second connection sub-plate and the inner wall of the corner brace cavity can be increased, thereby helping improve assembly stability between the frame body and the corner brace, and further helping improve use stability of the photovoltaic module.

FIG. 30 is a schematic cross-sectional view in a horizontal direction when a corner brace and a frame body are assembled according to an embodiment of the present disclosure.

In some embodiments, the first connection sub-plate 211 may have a first through hole 311, the second connection sub-plate 221 may have a second through hole 312, the first side edge portion 101 has a first mounting hole 301, the second side edge portion 102 has a second mounting hole 302, and the first through hole 311, the second through hole 312, the first mounting hole 301, and the second mounting hole 302 communicate with each other. In this way, a bolt may be used to sequentially pass through the first mounting hole 301, the first through hole 311, the second mounting hole 302, and the second through hole 312 to fix the corner brace to the frame body, thereby improving assembly stability between the corner brace and the frame body, and helping improve the service life of the photovoltaic module.

In FIG. 30, an example in which the first connection sub-plate 211 is arranged in the corner brace cavity 105 and the second side edge portion 102 is arranged in the clearance groove is used. In this way, the first mounting hole 301, the first through hole 311, the second mounting hole 302, and the second through hole 312 sequentially communicate with each other. In some embodiments, when the second connection sub-plate is arranged in the corner brace cavity, and the first side edge portion is arranged in the clearance groove, the first through hole, the first mounting hole, the second through hole, and the second mounting hole sequentially communicate with each other.

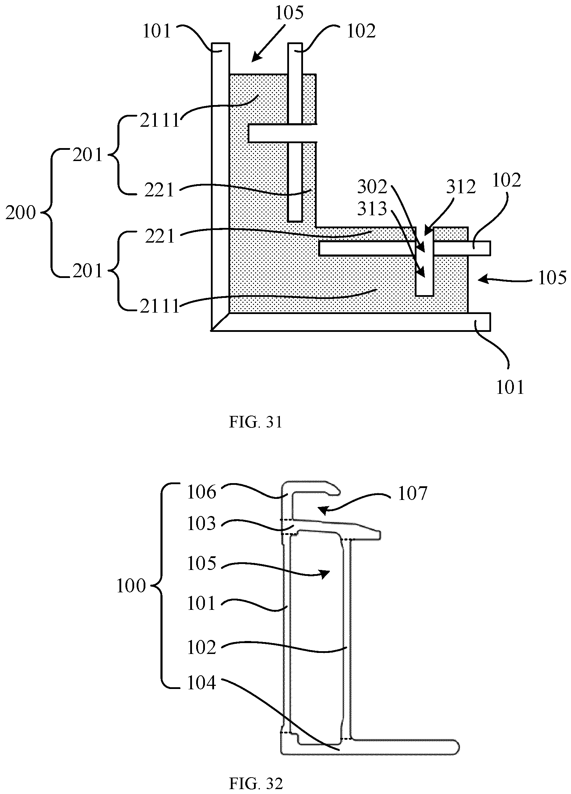

FIG. 31 is a schematic cross-sectional view in a horizontal direction when another corner brace and a frame body are assembled according to an embodiment of the present disclosure.

In some embodiments, referring to FIG. 31, when the first connection sub-plate 211 is arranged in the corner brace cavity 105, and the second side edge portion 102 is arranged in the clearance groove, the first connection sub-plate 211 may have a first blind hole 313, the second connection sub-plate 221 may have a second through hole 312, the second side edge portion 102 may have a second mounting hole 302, the second through hole 312, the second mounting hole 302, and the first blind hole 313 sequentially communicate with each other, and an inner wall of each of the second through hole 312, the second mounting hole 302, and the first blind hole 313 is provided with a thread. In this way, a bolt matching the thread may sequentially pass through the second through hole 312, the second mounting hole 302, and the first blind hole 313, to fix the corner brace 200 to the frame body 100.

In some embodiments, when the second connection sub-plate is arranged in the corner brace cavity, and the first side edge portion is arranged in the clearance groove, the second connection sub-plate may have a second blind hole, the first connection sub-plate may have a first through hole, the first side edge portion may have a first mounting hole, the first through hole, the first mounting hole, and the second blind hole sequentially communicate with each other, and an inner wall of each of the first through hole, the first mounting hole, and the second blind hole is provided with a thread. In this way, a bolt matching the thread may sequentially pass through the first through hole, the first mounting hole, and the second blind hole, to fix the corner brace to the frame body.

In some embodiments, one connection portion of the corner brace may be mounted to the corresponding part in a manner shown in FIG. 30, and the other connection portion of the corner brace may be mounted to the corresponding part in a manner shown in FIG. 31.

FIG. 32 is a schematic structural diagram of a second type of frame body according to an embodiment of the present disclosure.

In some embodiments, referring to FIG. 32, a connection point between the first side edge portion 101 and the middle portion 103 is a first connection point, a connection point between the second side edge portion 102 and the middle portion 103 is a second connection point, and a distance between an end of the middle portion 103 away from the first side edge portion 101 relative to the second side edge portion 102 and the first connection point is greater than a distance between the second connection point and the first connection point. A connection point between the first side edge portion 101 and the bottom edge portion 104 is a third connection point, a connection point between the second side edge portion 102 and the bottom edge portion 104 is a fourth connection point, and a distance between an end of the bottom edge portion 104 away from the first side edge portion 101 relative to the second side edge portion 102 and the third connection point is greater than a distance between the fourth connection point and the third connection point.

That is, the end of the middle portion 103 away from the first side edge portion 101 relative to the second side edge portion 102 protrudes from a side surface of the second side edge portion 102 away from the first side edge portion 101, and the end of the bottom edge portion 104 away from the first side edge portion 101 relative to the second side edge portion 102 protrudes from a side surface of the second side edge portion 102 away from the first side edge portion 101. In this way, when the first connection sub-plate 211 is located in the corner brace cavity 105, and the second side edge portion 102 is located in the clearance groove 202, the second connection sub-plate 221 is located on a side of the second side edge portion 102 away from the first side edge portion 101, and upper and lower ends of the second connection sub-plate 221 are stuck between the middle portion 103 and the bottom edge portion 104. In this way, a relative position between the corner brace 200 and the frame body 100 may be further fixed, to help improve assembly stability of the photovoltaic module, thereby improving use stability of the photovoltaic module.

In some embodiments, when the end of the middle portion away from the first side edge portion relative to the second side edge portion protrudes from a side surface of the second side edge portion away from the first side edge portion, the end of the middle portion away from the first side edge portion relative to the second side edge portion may be further bent toward the bottom edge portion. In this way, when the first connection sub-plate is located in the corner brace cavity and the second connection sub-plate is located on a side of the second side edge portion away from the first side edge portion, the second connection sub-plate may be stuck between the middle portion and the bottom edge portion, thereby further improving assembly stability of the corner brace and the frame body.

It should be noted that, in FIG. 32, an example in which a width of the bottom edge portion 104 is greater than a width of the middle portion 103 is used. In this way, the width of the bottom edge portion 104 is relatively large, which can help improve stability of the frame body 100 in a horizontal direction, and avoid a problem of tipping the frame body 100. In some embodiments, a width of the bottom edge portion may be equal to a width of the middle portion.

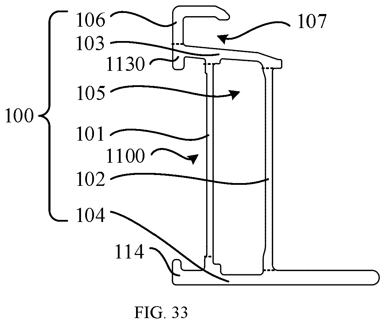

FIG. 33 is a schematic structural diagram of a third type of frame body according to an embodiment of the present disclosure.

In some embodiments, referring to FIG. 33, an end of the bottom edge portion 104 away from the second side edge portion 102 relative to the first side edge portion 101 is bent toward the middle portion 103 to form a first bent portion 114, an end of the middle portion 103 away from the second side edge portion 102 relative to the first side edge portion 101 is bent toward the bottom edge portion 104 to form a second bent portion 1130, and the first bent portion 114, the first side edge portion 101, and the second bent portion 1130 define a limiting groove 1100.

In this way, when the second connection sub-plate 221 is located in the corner brace cavity 105, and the first side edge portion 101 is located in the clearance groove 202, the first connection sub-plate 211 is located on a side of the first side edge portion 101 away from the second side edge portion 102, and the first connection sub-plate 211 may be stuck in the limiting groove 1100, to help stabilize a relative position between the corner brace and the frame body, improve assembly stability of the photovoltaic module, and further improve use stability of the photovoltaic module.

In some embodiments, a depth of the limiting groove 1100 is less than or equal to a thickness of the first connection sub-plate 211 in a direction perpendicular to a surface of the first side edge portion 101. In this way, the first connection sub-plate 211 can be stuck in the limiting groove 1100.

In some embodiments, when the frame body 100 has the limiting groove 1100, the first connection sub-plate 211 may alternatively be mounted in the corner brace cavity 105, the second side edge portion 102 is located in the clearance groove 202, and the second connection sub-plate 221 is located on a side of the second side edge portion 102 away from the first side edge portion 101.

It should be noted that, in FIG. 33, an example in which the end of the bottom edge portion 104 away from the first side edge portion 101 relative to the second side edge portion 102 protrudes from a side surface of the second side edge portion 102 away from the first side edge portion 101 is used. In this way, the width of the bottom edge portion 104 is relatively large, which may help improve stability of the frame body 100 in a horizontal direction, and avoid a problem of tipping the frame body 100. In some embodiments, the end of the bottom edge portion away from the first side edge portion relative to the second side edge portion may be flush with the surface of the second side edge portion away from the first side edge portion.

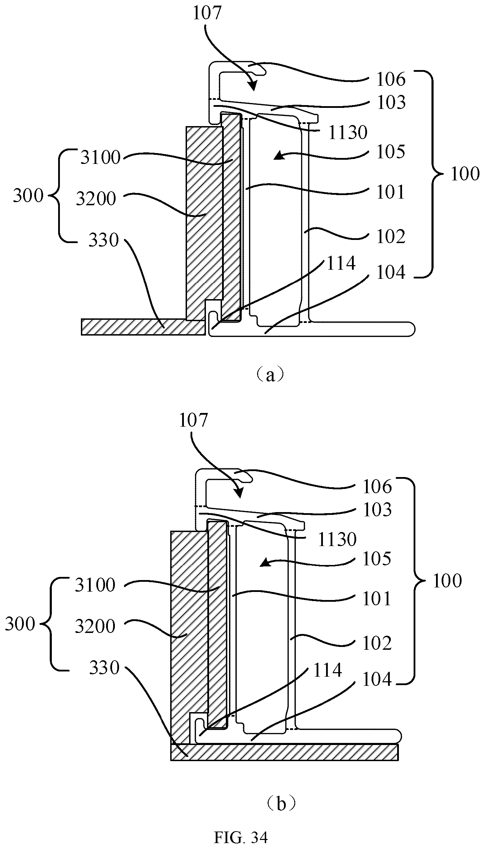

FIG. 34 is a schematic structural diagram of assembling two type of fixing components and the third type of frame body according to an embodiment of the present disclosure.

In some embodiments, referring to FIG. 34, the photovoltaic module may further include a fixing component 300. The fixing component 300 includes a first fixing portion 3100, a second fixing portion 3200, and a third fixing portion 330 that are sequentially connected, and the first fixing portion 3100 is located in the limiting groove 1100. Referring to (b) in FIG. 34, the third fixing portion 330 may be located on a bottom surface of the bottom edge portion 104, or referring to (a) in FIG. 34, the third fixing portion 330 may be located on a side of the bottom edge portion 104 away from the second side edge portion 102 relative to the first side edge portion 101, and a bottom surface of the third fixing portion 330 is flush with the bottom surface of the bottom edge portion 104; and one end of the second fixing portion 3200 is connected to a side of the first fixing portion 3100 away from the first side edge portion 101, and the other end of the second fixing portion 3200 is connected to the third fixing portion 330.

In this way, the frame body 100 may be fixedly mounted to the bracket by using the fixing component 300. Because the first fixing portion 3100 is stuck in the limiting groove 1100, a relative position between the fixing component 300 and the frame body 100 may be fixed without another component such as a bolt.

In some embodiments, the first fixing portion may have a first fixing hole, the first side edge portion may have a first positioning hole, and the first fixing hole and the first positioning hole communicate with each other. In this way, the fixing component and the frame body may be further fixed by a bolt running through the first fixing hole and the first positioning hole, to further improve the assembly stability of the fixing component and the frame body, and improve the use stability of the photovoltaic module.

In some embodiments, the third fixing portion may have a third fixing hole, and the third fixing hole is used for mounting of the fixing component and the bracket. In some embodiments, when the third fixing portion is located on the bottom surface of the bottom edge portion, the bottom edge portion may have a bottom positioning hole, and the bottom positioning hole and the third fixing hole communicate with each other. In this way, the frame body and the fixing component can be simultaneously fixed to the bracket by a bolt running through the bottom positioning hole and the third fixing hole.

In some embodiments, in a direction perpendicular to a side surface of the first side edge portion 101, a thickness of the first fixing portion 3100 is less than or equal to a depth of the limiting groove 1100. In this way, the first fixing portion 3100 is stuck in the limiting groove 1100.

In some embodiments, when the first connection sub-plate 211 is located in the corner brace cavity 105, and the second side edge portion 102 is located in the clearance groove 202, the second connection sub-plate 221 is located on a side of the second side edge portion 102 away from the first side edge portion 101, and the limiting groove 1100 may be used for placing only the first fixing portion 3100.

In some embodiments, when the second connection sub-plate 221 is located in the corner brace cavity 105 and the first connection sub-plate 211 is located in the limiting groove 1100, the first fixing portion 3100 and the first connection sub-plate 211 may be respectively at different positions on the frame body 100 in the length direction, that is, the first fixing portion 3100 and the first connection sub-plate 211 are respectively at different positions in the limiting groove 1100. In this way, the limiting groove 1100 may be used to fix the first fixing portion 3100 and may also be used to fix the first connection sub-plate 211.

In some embodiments, when the second connection sub-plate 221 is located in the corner brace cavity 105 and the first connection sub-plate 211 is located in the limiting groove 1100, both the first fixing portion 3100 and the first connection sub-plate 211 may be at a same position in the limiting groove 1100, that is, the first fixing portion 3100 may be located on a side of the first connection sub-plate 211 away from the first side edge portion 101. In this way, the first fixing portion 3100 and the first connection sub-plate 211 may be stacked in the limiting groove 1100, and the first fixing portion 3100 and the first connection sub-plate 211 may be simultaneously stuck in the limiting groove 1100.

In some embodiments, in a direction perpendicular to a side surface of the first side edge portion 101, a sum of thicknesses of the first fixing portion 3100 and the first connection sub-plate 211 may be less than or equal to a depth of the limiting groove 1100, so that the first fixing portion 3100 and the first connection sub-plate 211 are simultaneously stuck in the limiting groove 1100.

In some embodiments, the first fixing portion may have a first fixing hole, the first connection sub-plate may have a first through hole, the second connection sub-plate may have a second through hole, the first side edge portion may have a first mounting hole, the second side edge portion may have a second mounting hole, and the first fixing hole, the first through hole, the second through hole, the first mounting hole, and the second mounting hole communicate with each other. In this way, when the first fixing portion and the first connection sub-plate are stacked in the limiting groove, a bolt may be used to sequentially run through the first fixing hole, the first through hole, the first mounting hole, the second through hole, and the second mounting hole, thereby mutually fixing the frame body, the corner brace, and the fixing component.

In some embodiments, referring to FIG. 25, the photovoltaic module may further include a photovoltaic laminate 400. The photovoltaic laminate 400 is located on a top surface of the middle portion 103 of the frame body 100, and the middle portion 103 is located on a side of the photovoltaic laminate 400 facing away from sunlight.

In some embodiments, the photovoltaic laminate 400 may include a cell, an adhesive film covering a surface of the cell, and a cover plate covering a surface of the adhesive film away from the cell.

In some embodiments, the cell may be any one of a passivated emitter and rear cell (PERC), a passivated emitter and rear totally-diffused (PERT) cell, a tunnel oxide passivated contact (TOPCon) cell, a heterojunction technology (HIT/HJT) cell, or a back contact (BC) cell. In some embodiments, the cell may be a monocrystalline silicon solar cell, a polycrystalline silicon solar cell, an amorphous silicon solar cell, or a multi-element compound solar cell, and the multi-element compound solar cell may be specifically a cadmium sulfide solar cell, a gallium arsenide solar cell, a copper indium selenide solar cell, or a perovskite solar cell.

In some embodiments, the adhesive film may be an organic encapsulating adhesive film such as an ethylene-vinyl acetate (EVA) adhesive film, a polyolefin elastomer (POE) adhesive film, or a polyvinyl butyral (PVB) adhesive film.

In some embodiments, the cover plate may be a cover plate having a light-transmitting function, such as a glass cover plate or a plastic cover plate. In some embodiments, a surface of the cover plate facing the adhesive film may be an uneven surface, thereby increasing utilization of incident light. In some embodiments, referring to FIG. 25 and FIG. 32 to FIG. 34, the frame body 100 may further include a limiting portion 106. The limiting portion 106 is located above the middle portion 103, a bottom end of the limiting portion 106 is connected to the middle portion 103, a top portion of the limiting portion 106 is bent toward the middle portion 103 to define a snap-fit groove 107 with the middle portion 103, and the snap-fit groove 107 is configured to place the photovoltaic laminate 400.

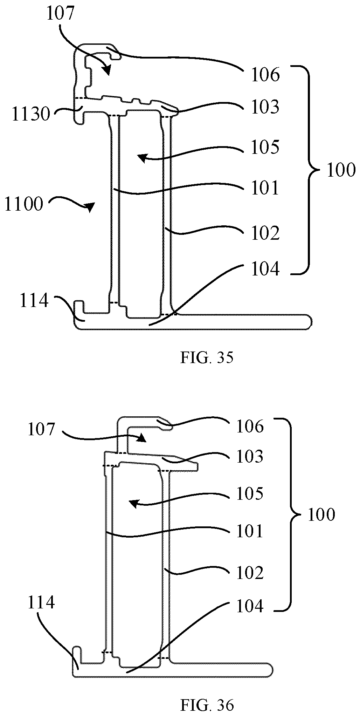

FIG. 35 is a schematic structural diagram of a fourth type of frame body according to an embodiment of the present disclosure.

In some embodiments, a connection point between the limiting portion 106 and the middle portion 103 is an end of the middle portion 103 away from the second side edge portion 102 relative to the first side edge portion 101, and an orthographic projection of an end of the top portion of the limiting portion 106 close to the middle portion 103 on a surface of the middle portion 103 coincides with a connection point between the first side edge portion 101 and the middle portion 103. That is, in the vertical direction, an end of the top portion of the limiting portion 106 close to the middle portion 103 is flush with the first side edge portion 101. In this way, when the photovoltaic laminate 400 is placed in the snap-fit groove 107, the limiting portion 106 may exert a sufficient pressing and fixing force on the photovoltaic laminate 400, to avoid a problem of misplacement or falling off of the photovoltaic laminate 400. In addition, the width of the bent top portion of the limiting portion 106 is relatively small, so that the top portion of the limiting portion 106 can be prevented from blocking the surface of the photovoltaic laminate 400, thereby preventing a light receiving area of the photovoltaic laminate 400 from being reduced, to help maintain good light absorption efficiency of the photovoltaic module and improve a light conversion rate of the photovoltaic module.

A mounting process of the photovoltaic module is as follows. The laminate 400 is inserted into the snap-fit groove 107 obliquely from the side surface of the frame body 100, and a structural adhesive is injected into the snap-fit groove 107 after an edge of the laminate 400 is inserted into the snap-fit groove 107, to implement bonding and fixing between the laminate 400 and the frame body 100. After the structural adhesive is cured, the photovoltaic module is trimmed to clean the overflowing structural adhesive, and then the photovoltaic module may be encapsulated, stored, and transported. When the photovoltaic module needs to be put into use, the frame body 100 is fixed to a bracket or a pressing block and/or a purlin on the roof, so that the frame body 100 is fixed to the target body.

In some embodiments, as shown in FIG. 35, an inner wall of the snap-fit groove 107 facing the photovoltaic laminate 400 may have a plurality of adhesive overflow grooves, used for accommodating a part of the structural adhesive, to avoid a case that the structural adhesive covers the surface of the photovoltaic laminate 400 to block light, thereby improving the light absorption efficiency of the photovoltaic module.

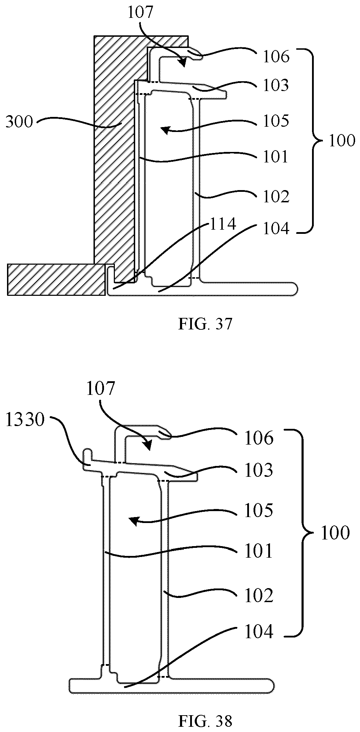

In FIG. 25 and FIG. 32 to FIG. 35, an example in which a connection point between the limiting portion 106 and the middle portion 103 is an end of the middle portion 103 away from the second side edge portion 102 relative to the first side edge portion 101 is used. FIG. 36 is a schematic structural diagram of a fifth type of frame body according to an embodiment of the present disclosure, and FIG. 37 is a schematic structural diagram of assembling a fixing component and the fifth type of frame body according to an embodiment of the present disclosure.

In some embodiments, referring to FIG. 36, a connection point between the limiting portion 106 and the middle portion 103 may be closer to the second side edge portion 102 than a connection point between the first side edge portion 101 and the middle portion 103. In this way, a corner may be formed between an end of the middle portion 103 away from the second side edge portion 102 relative to the first side edge portion 101 and the limiting portion 106. Referring to FIG. 37, when the fixing component 300 is arranged on a side of the first side edge portion 101 away from the second side edge portion 102, a surface of the fixing component 300 facing the frame body 100 may be designed according to shapes of the first side edge portion 101 and the limiting portion 106, thereby helping improve stability of fixing the frame body 100 on the bracket by the fixing component 300. It may be understood that, compared with a case that the limiting portion 106 is aligned with the first side edge portion 101, a case that a corner is formed between an end of the middle portion 103 away from the second side edge portion 102 relative to the first side edge portion 101 and the limiting portion 106 can limit relative displacement between the frame body 100 and the fixing component 300, and increase a load of the fixing component 300 on the frame body 100, thereby improving strength and stability of the photovoltaic module.

In FIG. 36 and FIG. 37, an example in which an end of the bottom edge portion 104 away from the second side edge portion 102 relative to the first side edge portion 101 is bent toward the middle portion 103 to form a first bent portion 114 is used. In this way, the load between the fixing component 300 and the frame body 100 may be further increased, thereby helping improve the strength of fixing the frame body 100 by the fixing component 300, and improve the strength and stability of the photovoltaic module.

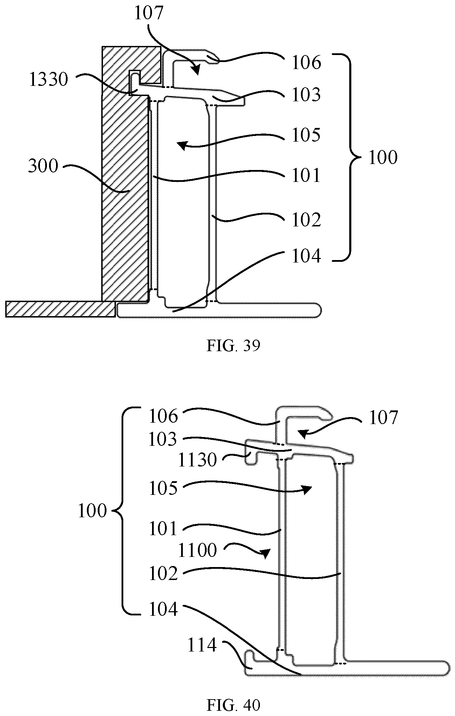

FIG. 38 is a schematic structural diagram of a sixth type of frame body according to an embodiment of the present disclosure, and FIG. 39 is a schematic structural diagram of assembling a fixing component and the sixth type of frame body according to an embodiment of the present disclosure.

In some embodiments, referring to FIG. 38, when a connection point between the limiting portion 106 and the middle portion 103 is closer to the second side edge portion 102 than a connection point between the first side edge portion 101 and the middle portion 103, the end of the middle portion 103 away from the second side edge portion 102 relative to the first side edge portion 101 may alternatively be bent away from the bottom edge portion 104 to form a third bent portion 1330. In this way, the limiting portion 106 and the third bent portion 1330 may form a groove structure. Referring to FIG. 39, when the fixing component 300 is arranged on a side of the first side edge portion 101 away from the second side edge portion 102, a surface of the fixing component 300 facing the frame body 100 may be designed according to shapes of the first side edge portion 101 and the limiting portion 106, so that the third bent portion 1330 is stuck into the fixing component 300, thereby helping improve assembly stability of the fixing component 300 and the frame body 100, and improving overall use stability of the photovoltaic module.

In FIG. 38 and FIG. 39, an example in which an end of the bottom edge portion 104 away from the second side edge portion 102 relative to the first side edge portion 101 protrudes from a surface of the first side edge portion 101 away from the second side edge portion 102 is used. In this way, the load between the fixing component 300 and the frame body 100 may be further increased, thereby helping improve the strength of fixing the frame body 100 by the fixing component 300, and improve the strength and stability of the photovoltaic module.

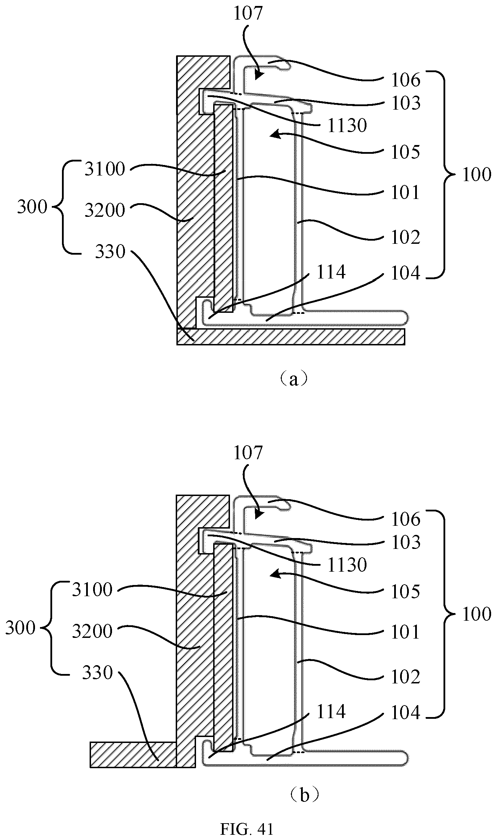

FIG. 40 is a schematic structural diagram of a seventh type of frame body according to an embodiment of the present disclosure, and FIG. 41 is a schematic structural diagram of assembling two types of fixing components and the seventh type of frame body according to an embodiment of the present disclosure.

In some embodiments, referring to FIG. 40, when the first bent portion 114, the first side edge portion 101, and the second bent portion 1130 of the frame body 100 define the limiting groove 1100, a connection point between the limiting portion 106 and the middle portion 103 may be flush with a connection point between the first side edge portion 101 and the middle portion 103. In this way, the limiting portion 106 and the second bent portion 1130 form a corner. Referring to FIG. 41, when the frame body 100 is assembled with the fixing component 300, a shape of the second fixing portion 3200 may be designed according to a shape of the corner formed by the limiting portion 106 and the second bent portion 1130, thereby increasing the load between the fixing component 300 and the frame body 100, improving the strength of fixing the frame body 100 by the fixing component 300, and further improving the strength and stability of the photovoltaic module.

In some embodiments, when the first bent portion, the first side edge portion, and the second bent portion of the frame body define the limiting groove, the connection point between the limiting portion and the middle portion may alternatively be disposed closer to the second side edge portion than the connection point between the first side edge portion and the middle portion.

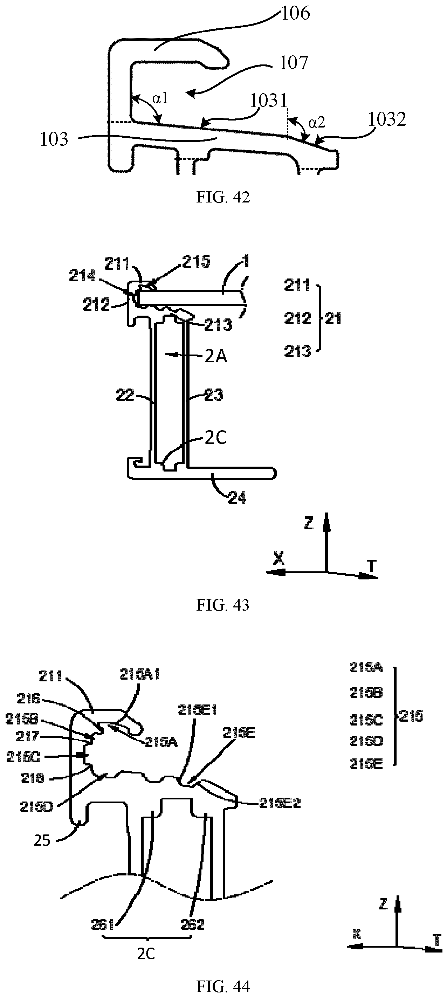

FIG. 42 is a schematic diagram of a partially enlarged structure of the frame body shown in FIG. 33 according to an embodiment of the present disclosure.

In some embodiments, referring to FIG. 25, FIG. 33, and FIG. 42 together, a surface of the middle portion 103 facing the photovoltaic laminate 400 includes a first surface 1031 and a second surface 1032, both the first surface 1031 and the second surface 1032 incline relative to a thickness direction of the photovoltaic laminate and extend in a direction facing away from the photovoltaic laminate 400, and the second surface 1032 is located on a side of the first surface 1031 facing away from an edge of the photovoltaic laminate 400; and an angle between an inclination direction of the first surface 1031 and the thickness direction of the photovoltaic laminate 400 is α1, an angle between an inclination direction of the second surface 1032 and the thickness direction of the photovoltaic laminate 400 is α2, and α1 < α2.

The first surface 1031 is inclined in a direction facing away from the photovoltaic laminate 400 relative to the thickness direction of the photovoltaic laminate 400, which helps enable the photovoltaic laminate 400 to be obliquely inserted into the snap-fit groove 107 during the mounting of the laminate 400 and the frame body 100. Compared with a case that the laminate 400 is inserted into the snap-fit groove 107 in the horizontal direction, a proper inclination angle can reduce the difficulty of inserting the photovoltaic laminate 400 into the snap-fit groove 107, thereby helping improve the mounting efficiency of the photovoltaic laminate 400 and the frame body 100 and the yield. In addition, during insertion of the photovoltaic laminate 400, a risk of damage to an edge of the photovoltaic laminate 400 can be avoided, thereby improving the yield of the photovoltaic module. An inclination angle of the second surface 1032 is greater than an inclination angle of the first surface 1031, so that the second surface 1032 can guide the photovoltaic laminate 400, thereby further reducing insertion difficulty of the photovoltaic laminate 400, reducing machining difficulty of the first surface 1031 and the second surface 1032, and helping reduce machining costs of the frame body 100.

In some embodiments, the angle α1 between the inclination direction of the first surface 1031 and the thickness direction of the photovoltaic laminate 400 satisfies: 90° <α1 ≤ 100°. For example, α1 may be 91°, 91.5°, 92°, 92.5°, 93°, 93.5°, 94°, 94.5°, 95°, 95.5°, 96°, 96.5°, 97°, 97.5°, 98°, 98.5°, 99°, 99.5°, 100°, or the like.

In some embodiments, α1 and α2 satisfy: 10° ≤ α2-α1 ≤ 20°. For example, α2-α1 may be 10°, 10.5°, 11°, 11.5°, 12°, 12.5°, 13°, 13.5°, 14°, 14.5°, 15°, 15.5°, 16°, 16.5°, 17°, 17.5°, 18°, 18.5°, 19°, 19.5°, 20°, or the like.

If a difference between α2 and α1 is relatively small, for example, α2-α1 is less than 10°, the second surface 1032 has a relatively poor guiding effect on the photovoltaic laminate 400. If a difference between α2 and α1 is relatively large, for example, α2-α1 is greater than 20°, the volume of the structural adhesive that needs to fill between the second surface 1032 and the photovoltaic laminate 400 is relatively large, which increases costs of the material for fixing the frame body 100 and the laminate 400, prolongs time required for curing the structural adhesive, and increases a risk that the structural adhesive in the snap-fit groove 107 flows out of the snap-fit groove 107, to reduce the firmness of bonding between the photovoltaic laminate 400 and the middle portion 103. Therefore, setting of 10° ≤ α2-α 1 ≤ 20° can improve the guiding effect of the second surface 1032 on the photovoltaic laminate 400, reduce the costs of the material for fixing the frame body 100 and the photovoltaic laminate 400, and reduce the risk that the structural adhesive flows out of the snap-fit groove 107, to improve the firmness of bonding between the middle portion 103 and the photovoltaic laminate 400.

The photovoltaic module provided in the embodiments of the present disclosure includes a frame body 100 and a corner brace 200. A bottom edge portion 104, a first side edge portion 101, a middle portion 103, and a second side edge portion 102 of the frame body 100 are sequentially connected to define a corner brace cavity 105. The corner brace 200 includes two connection portions 201 connected in an L shape, each connection portion 201 includes a first connection sub-plate 211 and a second connection sub-plate 221 that are parallel to each other, and a clearance groove 202 is formed between the first connection sub-plate 211 and the second connection sub-plate 221. One of the first connection sub-plate 211 and the second connection sub-plate 221 of the corner brace 200 is arranged in the corner brace cavity 105, and the other of the first connection sub-plate 211 and the second connection sub-plate 221 is arranged outside the corner brace cavity 105. In this way, friction may be generated between each of a surface of the first side edge portion 101 facing the corner brace cavity 105 and a surface of the second side edge portion 102 facing the corner brace cavity 105 and a connection portion 201 of the corner brace 200. In addition, referring to (a) in FIG. 28, when the first side edge portion 101 is located in the clearance groove 202, friction may be generated between a surface of the first side edge portion 101 away from the second side edge portion 102 and the first connection sub-plate 211, or referring to (b) in FIG. 28, when the second side edge portion 102 is located in the clearance groove 202, friction may be generated between a surface of the second side edge portion 102 away from the first side edge portion 101 and the second connection sub-plate 221. That is, when the corner brace 200 is assembled into the corner brace cavity 105, at least three contact surfaces between the corner brace 200 and the frame body 100 may generate friction. Compared with a case that the connection portion 201 is entirely disposed in the corner brace cavity 105, at least one contact surface is added between the corner brace 200 and the frame body 100, which helps improve assembly stability of the corner brace 200 and the frame body 100. During use of the photovoltaic module, a problem of size deviation may occur in the first connection sub-plate 211 or the second connection sub-plate 221 located in the corner brace cavity 105 due to wear and tear, resulting in a decline in mounting stability of the first connection sub-plate 211 or the second connection sub-plate 221 in the corner brace cavity 105. However, because the clearance groove 202 of the corner brace 200 restricts movement of the first side edge portion 101 or the second side edge portion 102, the clearance groove 202 may compensate for the size deviation of the first connection sub-plate 211 or the second connection sub-plate 221, and stabilize a relative position between the corner brace 200 and the frame body 100, to further avoid a problem that the corner brace 200 and the frame body 100 fall off directly, thereby helping improve use stability of the photovoltaic module.

As shown in FIG. 43, the clamping part 21 is provided with a plurality of adhesive overflow grooves 215 at the side wall near the laminated member 1, which can increase the volume of the structural adhesive between the clamping part 21 and the laminated member 1, thereby facilitating the enhancement of the stability of the connection between the laminated member 1 and the frame 2. In the process of filling the structural adhesive between the clamping part 21 and the laminated member 1, the adhesive overflow grooves 215 can accommodate a portion of the structural adhesive, reducing the risk that the structural adhesive overflows out of the clamping space 214 and reduce the risk of the structural adhesive overflowing out of the clamping space 214 and blocking the light-receiving surface of the laminated member 1, so as to enhance the photoelectric conversion efficiency and the output power of the laminated member 1, and to facilitate the enhancement of the aesthetics of the photovoltaic module.

As shown in FIG. 44, the plurality of adhesive overflow grooves 215 at least include a first adhesive overflow groove 215A and a second adhesive overflow groove 215B. The first adhesive overflow groove 215A is arranged on the first part 211, the second adhesive overflow groove 215B is arranged at a corner of the connection point between the first part 211 and the second part 212, and a side wall of the second adhesive overflow groove 215B is connected to a side wall of the first adhesive overflow groove 215A to form a first protrusion 216.

The setting of the first adhesive overflow groove 215A and the second adhesive overflow groove 215B increases the adhesive overflow space of the structural adhesive, thereby facilitating further improvement of the stability of the connection between the laminate 1 and the frame 2 and the aesthetics of the photovoltaic module. The first adhesive overflow groove 215A and the second adhesive overflow groove 215B are spaced apart by the first protrusion 216, which reduces the structural strength of the clamping part 21 due to the larger size of the groove resulting from the connection of the first adhesive overflow groove 215A and the second adhesive overflow groove 215B, thereby facilitating the enhancement of the structural strength of the clamping part 21 so as to facilitate prolongation of the service life of the frame 2, and facilitating the enhancement of the stability of the connection of the frame 2 to the laminate 1.

In the thickness direction Z of the laminate 1, the second adhesive overflow groove 215B is located above the first edge of the laminate 1. When the laminate 1 is subjected to a downward force in its own thickness direction Z, the center of the laminate 1 would bent downward and the first edge would be warped upward, and the second adhesive overflow groove 215B is provided above the first edge, which reduces the risk that the first edge would be damaged by the clamping part 21, which is conducive to improving the anti- trampling performance and load-bearing capacity of the photovoltaic module.

As shown in FIG. 44, the depth of the first adhesive overflow groove 215A gradually decreases in the first direction X toward a direction close to the center of the laminate 1. The first adhesive overflow groove 215A includes a first wall 215A1, the first wall 215A1 is disposed opposite to the opening position of the first adhesive overflow groove 215A in the thickness direction Z of the laminate 1, and the contour shape of the first wall 215A1 is arc-shaped.

The depth of the first adhesive overflow groove 215A is gradually reduced, the thickness at the edge of the first part 211 can be increased, thereby enhancing the structural strength of the first part 211. The risk of upward bending and deformation of the first part 211 driven by the laminate 1 when the laminate 1 is subjected to wind mortgages being upwardly pulled, thereby extending the service life of the frame 2, and reducing the risk of the laminate 1 being detached from the frame 2, and facilitating improvement of the stability of the connection between the frame 2 and the laminate 1. The setting of the first wall 215A1 as arc-shaped can further enhance the anti-deformation effect of the first part 211, and reduce the processing precision required for the first wall 215A1, thereby facilitating the reduction of the processing cost of the frame 2.

As shown in FIG. 44, the plurality of adhesive overflow grooves 215 further include a third adhesive overflow groove 215C. The third adhesive overflow groove 215C is arranged on the second part 212, and a side wall of the third adhesive overflow groove 215C is connected to a side wall of the second adhesive overflow groove 215B to form a second protrusion 217.

The setting of the third adhesive overflow groove 215C increases the adhesive overflow space of the structural adhesive, thereby facilitating further improvement of the stability of the connection between the laminate 1 and the frame 2 and the aesthetics of the photovoltaic module. The third adhesive overflow groove 215C and the second adhesive overflow groove 215B are spaced apart by the second protrusion 217, to reduce the structural strength of the clamping part 21 due to the larger size of the groove resulting from the connection of the third adhesive overflow groove 215C and the second adhesive overflow groove 215B, thereby facilitating the enhancement of the structural strength of the clamping part 21, so as to facilitate prolongation of the service life of the frame 2, and facilitating the enhancement of the stability of the connection of the frame 2 to the laminate 1.

As shown in FIG. 44, the plurality of adhesive overflow grooves 215 further include a fourth adhesive overflow groove 215D. The fourth adhesive overflow groove 215D is arranged at a corner of the connection point between the second part 212 and the third part 213. The edge of the laminate 1 is disposed opposite to the fourth adhesive overflow groove 215D in the thickness direction Z of the laminate 1, that is, the fourth adhesive overflow groove 215D is located below the first edge in the thickness direction Z of the laminate 1.

The setting of the fourth adhesive overflow groove 215D increases the adhesive overflow space of the structural adhesive, thereby facilitating further improvement of the stability of the connection between the laminate 1 and the frame 2 and the aesthetics of the photovoltaic module. The fourth adhesive overflow groove 215D is located below the first edge of the laminate 1. When the laminate 1 is subjected to an upward force in its own thickness direction Z, the center of the laminate 1 would bent upward and the first edge would be warped downward, and the fourth adhesive overflow groove 215D is provided below the first edge, to reduce the risk that the first edge would be damaged by the clamping part 21, which is conducive to improving the anti- trampling performance and load-bearing capacity of the photovoltaic module.

As shown in FIG. 44, a side wall of the fourth adhesive overflow groove 215D is connected to a side wall of the third adhesive overflow groove 215C to form a third protrusion 218. The fourth adhesive overflow groove 215D and the third adhesive overflow groove 215C are spaced apart by the third protrusion 218, to reduce the structural strength of the clamping part 21 due to the larger size of the groove resulting from the connection of the fourth adhesive overflow groove 215D and the third adhesive overflow groove 215C, thereby facilitating the enhancement of the structural strength of the clamping part 21, so as to facilitate prolongation of the service life of the frame 2, and facilitating the enhancement of the stability of the connection of the frame 2 to the laminate 1.

As shown in FIG. 44, the plurality of adhesive overflow grooves 215 further include a fifth adhesive overflow groove 215E. The fifth adhesive overflow groove 215E is arranged on the third part 213. In some embodiments, a plurality of fifth adhesive overflow grooves 215E are arranged in an extending direction of the third part 213 and spaced apart from each other. The setting of the fifth adhesive overflow groove 215E increases the adhesive overflow space of the structural adhesive, thereby facilitating further improvement of the stability of the connection between the laminate 1 and the frame 2 and the aesthetics of the photovoltaic module.

The fifth adhesive overflow groove 215E includes a second wall 215E1 and a third wall 215E2 opposite to each other in an extension direction of the third part 213. Either or both of an extension direction of the second wall 215E1 and an extension direction of the third wall 215E2 may have an angle greater than 0° relative to the thickness direction of the laminate, and the extension direction of the second wall 215E1 and the extension direction of the third wall 215E2 may alternative be parallel to the thickness direction of the laminate.

In an embodiment, a surface of the third part 213 near the laminate 1 may extend horizontally in the first direction X and the plurality of fifth adhesive overflow grooves 215E are arranged at intervals in the first direction X.

In another embodiment, the surface of the third part 213 near the laminate 1 obliquely extends in a direction facing away from the laminate 1, and the extension direction of the surface of the third part 213 near the laminate 1 is denoted as a third direction T. At this time, the plurality of fifth adhesive overflow grooves 215E are arranged at intervals in the third direction T. In one possible design, the third part 213, as a whole, obliquely extends in the third direction T. In another possible design, the surface of the third part 213 near the laminate 1 obliquely extends in the third direction T, and the surface of the third frame body 213 facing away from the laminate 1 extends horizontally in the first direction X, i.e., the thickness of the third part 213 is gradually reduced.

As shown in FIG. 43, a reinforcing rib 2C is arranged on the third part 213 and/or the third support part, and is located in the cavity 2A, so that a risk that the third part 213 and/or the third support part 24 is deformed toward the inside of the cavity 2A by an external force is reduced, thereby prolonging the service life of the frame 2.

The cavity 2A includes a first corner, a second corner, a third corner and a fourth corner. The first corner is opposite to the second corner in the thickness direction Z of the laminate 1, the third corner is opposite to the fourth corner in the thickness direction Z of the laminate 1, the third corner is opposite to the first corner in the first direction X, and the fourth corner is opposite to the second corner in the first direction X. For example, the first corner is a corner at the connection point of the first support part and the third part 213, the second corner is a corner at the connection point of the first support part and the third support part, the third corner is a corner at the connection point of the second support part and the third part 213, and the fourth corner is a corner at the connection point of the second support part and the third support part.

The reinforcing rib 2C is arranged at the first corner and the second corner, and/or, the reinforcing rib 2C is arranged at the third corner and the fourth corner. The setting of the reinforcing rib 2C at four corners can enhance the deformation resistance of the frame 2, thereby improving the structural strength of the frame 2.

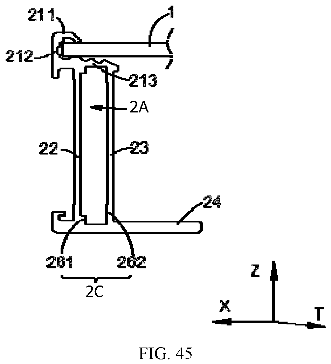

The reinforcing ribs 2C at the first corner and the second corner are first reinforcing ribs 261 and the reinforcing ribs 2C at the third corner and the fourth corner are first reinforcing ribs 262. In an embodiment, as shown in FIG. 44, the first reinforcing ribs 261 and the second reinforcing ribs 262 have the same parameters such as contour shape, length dimension, width dimension, and thickness dimension and the like, i.e., the first reinforcing ribs 261 and the second reinforcing ribs 262 are identical to facilitate the processing of the reinforcing ribs 2C and to reduce the processing cost of the reinforcing ribs 26. In another embodiment, the first reinforcing ribs 261 and the second reinforcing ribs 262 have different parameters such as contour shape, length dimension, width dimension, and thickness dimension and the like, for example, as shown in FIG. 45, in the first direction X, the size of the first reinforcing ribs 261 is larger or smaller than the size of the second reinforcing ribs 262, and/or, in the thickness direction Z of the laminate 1, the size of the first reinforcing ribs 261 is larger or smaller than the size of the second reinforcing ribs 262. That is, parameters such as contour shapes and sizes of adjacent reinforcing ribs 2C may be the same or different. When the reinforcing rib 2C is arranged at a corner, an example in which the reinforcing rib 2C is arranged at the corner at which the first support part 22 and the third part 213 are connected is used. In this case, the reinforcing rib 2C may be connected to the first support part 22 and the third part 213 to serve as an integrated structure, to improve the structural strength.

In an embodiment, a pressing block is fixed on a target body, and in a thickness direction Z of a laminate 1, the pressing block can press and fix a frame 2 on the target body. As shown in FIG. 44, the frame 2 includes a snap-fit portion 25, and the snap-fit portion 25 is configured to be in snap-fit with the pressing block in the first direction X, to limit relative movement between the pressing block and the frame 2 in the first direction X, thereby reducing a risk of separation of the pressing block from the frame 2 in the first direction X under an external force, so as to facilitate improvement in stability of the connection between the pressing block and the frame 2.

According to some embodiments of the present disclosure, the following examples are provided.

According to some embodiments of the present disclosure, a photovoltaic module mounting structure is provided. The photovoltaic module mounting structure incudes a frame and a pressing block. The frame includes a mounting portion and a bearing portion connected to the mounting portion. The mounting portion is provided with a first snap-fit groove for accommodating a laminate. A molding cavity is formed between the bearing portion and the mounting portion. A snap-fit portion is formed between the bearing portion and an outer wall surface of the molding cavity, and the snap-fit portion and the molding cavity are sequentially arranged in an orientation direction of an opening in the first snap-fit groove. The pressing block includes an insertion portion connected to the snap-fit portion, the insertion portion is connected to a fixing portion by a connection portion, and the fixing portion is configured to fix a bracket.

In some embodiments, the snap-fit portion includes a first snap-fit member and a second snap-fit member arranged opposite to each other, and the first snap-fit member is located on a side of the second snap-fit member close to the first snap-fit groove; and the insertion portion includes a snap-fit block, and the snap-fit block is snapped between the first snap-fit member and the second snap-fit member.

In some embodiments, a second snap-fit groove is provided on the first snap-fit member, and the second snap-fit groove is recessed toward a side close to the first snap-fit groove. A third snap-fit groove is provided on the second snap-fit member, and the third snap-fit groove is recessed toward a side away from the first snap-fit groove. Two ends of the snap-fit block are respectively snapped into the second snap-fit groove and the third snap-fit groove.

In some embodiments, a first hole is provided on the snap-fit block, and the first hole runs through the snap-fit block in the orientation direction of the opening in the first snap-fit groove. A second hole corresponding to the first hole is provided on an outer side wall of the molding cavity, and the second hole runs through the outer side wall of the molding cavity in the orientation direction of the opening in the first snap-fit groove. The snap-fit block is fixedly connected to the outer side wall of the molding cavity by a first connection member.

In some embodiments, the connection portion is located on a side of the snap-fit block away from the first snap-fit groove, and in a direction in which the mounting portion points to a side of the bearing portion, a cross-sectional shape of the connection portion is an inverted L shape.

In some embodiments, in a direction in which the mounting portion points to a side of the bearing portion, each of an orthographic projection of the connection portion, an orthographic projection of the snap-fit block, and an orthographic projection of a part of the laminate overlaps with an orthographic projection of the fixing portion.

In some embodiments, the connection portion includes a transverse plate and a longitudinal plate connected to the transverse plate. An inverted L-shaped structure is formed between the transverse plate and the longitudinal plate. The transverse plate is connected to a side of the snap-fit block away from the molding cavity, and the longitudinal plate is connected to an end of the fixing portion. The fixing portion extends toward a side close to the bottom wall of the molding cavity.

In some embodiments, in a direction in which the mounting portion points to a side of the bearing portion, none of an orthographic projection of the insertion portion, an orthographic projection of the connection portion, and an orthographic projection of the laminate overlaps with an orthographic projection of the fixing portion.

In some embodiments, the connection portion includes a transverse plate and a longitudinal plate connected to the transverse plate. An inverted L-shaped structure is formed between the transverse plate and the longitudinal plate. The transverse plate is connected to a side of the snap-fit block away from the molding cavity, and the longitudinal plate is connected to a side of the fixing portion close to the molding cavity. The fixing portion extends toward a side away from the bottom wall of the molding cavity.

In some embodiments, the fixing portion includes a fixing block. A third hole is provided on the fixing block. The third hole penetrates in a direction in which the mounting portion points to a side of the bearing portion. The fixing block is connected to the bracket by a second connection member.

According to some embodiments of the present disclosure, a photovoltaic module is provided. The photovoltaic module includes a frame body and a corner brace. The frame body includes a middle portion, a first side edge portion, a second side edge portion, and a bottom edge portion. The bottom edge portion, the first side edge portion, the middle portion, and the second side edge portion are sequentially connected to define a corner brace cavity. The corner brace includes two connection portions connected in an L shape, each connection portion includes a first connection sub-plate and a second connection sub-plate that are parallel to each other, and a clearance groove is formed between the first connection sub-plate and the second connection sub-plate. The first connection sub-plate is located in the corner brace cavity and the second side edge portion is located in the clearance groove, or, the second connection sub-plate is located in the corner brace cavity and the first side edge portion is located in the clearance groove.

In some embodiments, a width of the clearance groove is less than or equal to a thickness of the first side edge portion, or, a width of the clearance groove is less than or equal to a thickness of the second side edge portion.

In some embodiments, a surface of the first connection sub-plate facing the clearance groove and/or a surface of the second connection sub-plate facing the clearance groove have a snap-fit structure.

In some embodiments, an end of the bottom edge portion away from the second side edge portion relative to the first side edge portion is bent toward the middle portion to form a first bent portion, an end of the middle portion away from the second side edge portion relative to the first side edge portion is bent toward the bottom edge portion to form a second bent portion, and the first bent portion, the first side edge portion, and the second bent portion define a limiting groove.

In some embodiments, the frame body further includes a limiting portion. The limiting portion is located above the middle portion, a bottom end of the limiting portion is connected to an end of the middle portion away from the second side edge portion relative to the first side edge portion, a top portion of the limiting portion is bent toward the middle portion to define a snap-fit groove with the middle portion, and an orthographic projection of an end of the top portion of the limiting portion close to the middle portion on a surface of the middle portion coincides with a connection point between the first side edge portion and the middle portion.

In some embodiments, the photovoltaic module includes a photovoltaic laminate, located on a top surface of the middle portion. The middle portion is located on a side of the photovoltaic laminate facing from sunlight. A surface of the middle portion facing the photovoltaic laminate includes a first surface and a second surface, both the first surface and the second surface incline relative to a thickness direction of the photovoltaic laminate and extend in a direction facing away from the photovoltaic laminate, and the second surface is located on a side of the first surface facing away from an edge of the photovoltaic laminate; and an angle between an inclination direction of the first surface and the thickness direction of the photovoltaic laminate is α1, an angle between an inclination direction of the second surface and the thickness direction of the photovoltaic laminate is α2, and α1 < α2.

In some embodiments, the photovoltaic module includes a photovoltaic laminate, an edge of the photovoltaic laminate is located in the snap-fit groove, and a plurality of adhesive overflow grooves are provided on an inner wall of the snap-fit groove facing the photovoltaic laminate.

In some embodiments, the second connection sub-plate is located in the corner brace cavity, the first side edge portion is located in the clearance groove, and the first connection sub-plate is located in the limiting groove.

In some embodiments, the photovoltaic module further includes a fixing component. The fixing component includes a first fixing portion, a second fixing portion, and a third fixing portion that are sequentially connected, and the first fixing portion is located in the limiting groove. The third fixing portion is located on a bottom surface of the bottom edge portion, or located on a side of the bottom edge portion away from the second side edge portion relative to the first side edge portion. One end of the second fixing portion is connected to a side of the first fixing portion away from the first side edge portion, and the other end of the second fixing portion is connected to the third fixing portion.

In some embodiments, the second connection sub-plate is located in the corner brace cavity, the first side edge portion is located in the clearance groove, the first connection sub-plate and the first fixing portion are located in the limiting groove, and the first fixing portion is located on a side of the first connection sub-plate away from the first side edge portion.

According to some embodiments of the present disclosure, a photovoltaic module is provided. The photovoltaic module includes a laminate and a frame. The frame includes a clamping part and a support part, arranged in a thickness direction of the laminate, and the support part is disposed on a side of the laminate facing away from sunlight. The clamping part defines a clamping space, and an edge of a laminate is located in the clamping space. A plurality of adhesive overflow grooves are provided on an inner wall of the clamping part near the laminate. The photovoltaic module includes reinforcing ribs, the support part includes a cavity, the cavity includes a first corner and a second corner opposite to each other in the thickness direction of the laminate, and the reinforcing ribs are disposed at the first corner and the second corner.

In some embodiments, the clamping part includes a first part, a second part, a third part. In in the thickness direction of the laminate, the first part is located on a light-receiving surface of the laminate, and the third part is located on a back surface of the laminate. Two ends of the second part are respectively connected to the first part and the third part. The plurality of adhesive overflow grooves at least include a first adhesive overflow groove and a second adhesive overflow groove. The first adhesive overflow groove is arranged on the first part, the second adhesive overflow groove is arranged at a corner of a connection point between the first part and the second part, and a side wall of the second adhesive overflow groove is connected to a side wall of the first adhesive overflow groove to form a first protrusion.

In some embodiments, a depth of the first adhesive overflow groove gradually decreases in the first direction toward a direction close to the center of the laminate. The first adhesive overflow groove includes a first wall, the first wall is disposed opposite to the opening position of the first adhesive overflow groove in the thickness direction of the laminate, and the contour shape of the first wall is arc-shaped.

In some embodiments, the plurality of adhesive overflow grooves further include a third adhesive overflow groove. The third adhesive overflow groove is arranged on the second part, and a side wall of the third adhesive overflow groove is connected to a side wall of the second adhesive overflow groove to form a second protrusion.

In some embodiments, the plurality of adhesive overflow grooves further include a fourth adhesive overflow groove. The fourth adhesive overflow groove is arranged at a corner of the connection point between the second part and the third part. The edge of the laminate is disposed opposite to the fourth adhesive overflow groove in the thickness direction of the laminate.

In some embodiments, the plurality of adhesive overflow grooves further include fifth adhesive overflow grooves. The fifth adhesive overflow grooves are arranged on the third part, arranged in an extending direction of the third part and spaced apart from each other.

In some embodiments, the cavity further includes a third corner and a fourth corner opposite to each other in the thickness direction of the laminate, the third corner is opposite to the first corner in the first direction X, and the fourth corner is opposite to the second corner in the first direction X. The reinforcing ribs are disposed at the third corner and the fourth corner.

In some embodiments, the reinforcing ribs at the first corner and the second corner are first reinforcing ribs and the reinforcing ribs at the third corner and the fourth corner are first reinforcing ribs. In the first direction, the size of the first reinforcing ribs is larger or smaller than the size of the second reinforcing ribs, and/or, in the thickness direction of the laminate, the size of the first reinforcing ribs is larger or smaller than the size of the second reinforcing ribs.

In some embodiments, the photovoltaic module further includes a junction box. The junction box is located on a side on which a long side of the laminate is located, or the junction box is located on a side on which a short side of the laminate is located. The junction box is an integrated junction box, and the integrated junction box is separately connected to a positive electrode and a negative electrode of the laminate; or the junction box includes a first junction box and a second junction box, the first junction box is connected to a positive electrode of the laminate, and the second junction box is connected to a negative electrode of the laminate.

In some embodiments, the photovoltaic module further includes a junction box and an inverter, and the junction box and the inverter are arranged in the first direction. A distance S1 between the inverter and an edge of the photovoltaic module in the first direction satisfies 350 mm ≤ S1 ≤ 400 mm. A distance S2 between the inverter and an edge of the photovoltaic module in the second direction satisfies 240 mm ≤ S2 ≤ 300 mm.

In some embodiments, the laminate includes a first cover plate, a first adhesive film, a cell string, a second adhesive film, and a second cover plate that are stacked in the thickness direction of the laminate, and the cell string includes a plurality of solar cells, adjacent solar cells are connected in series or in parallel, and the solar cell is a back contact cell, a tunnel oxide passivated contact cell, a heterojunction with intrinsic thin-film cell, a passivated emitter rear cell, or a perovskite cell.

The above descriptions are merely preferred embodiments of the present disclosure and are not intended to limit the present disclosure. For a person skilled in the art, the present disclosure may have various modifications and changes. Any modification, equivalent replacement, or improvement made without departing from the spirit and principle of the present disclosure shall fall within the protection scope of the present disclosure.

## Claims

1. A photovoltaic module, comprising a laminate (1) and a frame (2);
wherein the frame (2) includes a clamping part (21), a first support part (22), and a second support part (23), and a first edge of the laminate (1) is located in a space defined by the clamping part (21);
the first support part (22) and the second support part (23) are arranged on a first side of the laminate (1) opposite to a second side of the laminate (1) configured to face sunlight during operation of the photovoltaic module, the first support part (22) and the second support part (23) are spaced apart in a first direction (X), and the first support part (22) is located on a side of the second support part (23) close to the first edge; and
the clamping part (21) includes a first part (211), located on the second side of the laminate (1), the first part (211) includes a first end, located on a side of the first part (211) away from the first edge in the first direction (X), and the first end is aligned with the first support part (22) in a thickness direction (Z) of the laminate (1).

2. The photovoltaic module according to claim 1, wherein the frame (2) includes a first snap-fit portion (25) extending in the thickness direction (Z) of the laminate (1), the first snap-fit portion (25) is connected to the clamping part (21), and the first snap-fit portion (25) is located on a side of the first support part (22) facing away from the second support part (23) in the first direction (X); and
the first snap-fit portion (25) is configured to be in snap-fit with a pressing block (5).

3. The photovoltaic module according to claim 2, wherein the first snap-fit portion (25) is located on the first side of the laminate (1), the first snap-fit portion (25), the clamping part (21), and the first support part (22) define a first accommodating groove (251), and the first accommodating groove (251) is configured to accommodate a part of the pressing block (5).

4. The photovoltaic module according to claim 3, wherein a size D1 of the first accommodating groove (251) in the first direction (X) and a distance D2 between the first support part (22) and the second support part (23) in the first direction (X) satisfy 0.75 ≤ D2/D1 ≤ 4.

5. The photovoltaic module according to claim 2, wherein the frame (2) further includes a second snap-fit portion (26), the second snap-fit portion (26) is connected to a side of the clamping part (21) facing away from the laminate (1), and extends in a direction facing away from the laminate (1);
the first snap-fit portion (25) is arranged on a side of the second snap-fit portion (26) away from the clamping part (21), and extends in the thickness direction (Z) of the laminate (1) from the second snap-fit portion (26); and
the first snap-fit portion (25), the second snap-fit portion (26), and the clamping part (21) define a first accommodating groove (251), the first accommodating groove (251) is configured to accommodate a part of the pressing block (5).

6. The photovoltaic module according to claim 2, wherein a thickness dimension L2 of the first snap-fit portion (25) in the first direction (X) satisfies 0.5 mm ≤ L2 ≤ 1.5 mm.

7. The photovoltaic module according to any one of claims 1 to 6, wherein the frame (2) further includes a third support part (24), and the third support part (24) is located on sides of the first support part (22) and the second support part (23) away from the clamping part (21) in the thickness direction (Z) of the laminate (1);
the frame (2) includes a third snap-fit portion (27) extending in the thickness direction (Z) of the laminate (1), the third snap-fit portion (27) is connected to the third support part (24), the third snap-fit portion (27) is located on a side of the third support part (24) facing away from the second support part (23) in the first direction (X), and the third snap-fit portion (27) is located on a side of the third support part (24) facing the clamping part (21) in the thickness direction (Z) of the laminate (1); and
the third snap-fit portion (27) is configured to be in snap-fit with a pressing block (5);
optionally, wherein the frame (2) further includes a fourth snap-fit portion (28) extending in the first direction (X), the fourth snap-fit portion (28) is located on a side of the third snap-fit portion (27) facing away from the third support part (24) in the thickness direction (Z) of the laminate (1), the fourth snap-fit portion (28), the third snap-fit portion (27), and the third support part (24) define a second accommodating groove (281), and the second accommodating groove (281) is configured to accommodate a part of the pressing block (5); and
a size of the second accommodating groove (281) in the thickness direction (Z) of the laminate (1) ranges from 0.5 mm to 3 mm;
optionally, wherein the frame (2) further includes a fifth snap-fit portion (29), arranged at an end of the fourth snap-fit portion (28) away from the third snap-fit portion (27) and extending in the thickness direction (Z) of the laminate (1).

8. The photovoltaic module according to any one of claims 2 to 7, wherein the pressing block (5) includes an insertion portion connected to the first snap-fit portion (25), and a fixing portion connected to the insertion portion; and
the fixing portion is configured to fix a target body.

9. The photovoltaic module according to any one of claims 1 to 8, wherein a size of the frame (2) in the first direction (X) ranges from 20 mm to 35 mm; and
a size of the frame (2) in the thickness direction (Z) of the laminate (1) ranges from 30 mm to 50 mm.

10. The photovoltaic module according to any one of claims 1 to 9, wherein the laminate (1) includes a first cover plate (11), a first adhesive film (12), a cell string, a second adhesive film (15), and a second cover plate (16), the first cover plate (11) and the second cover plate (16) are respectively located on two sides of the cell string in the thickness direction (Z) of the laminate (1), the first adhesive film (12) is located between the first cover plate (11) and the cell string, and the second adhesive film (15) is located between the second cover plate (16) and the cell string; and
the cell string includes a plurality of solar cells (13), adjacent solar cells are connected in series or in parallel, and the solar cell is a back contact cell, a tunnel oxide passivated contact cell, a heterojunction with intrinsic thin-film cell, a passivated emitter rear cell, or a perovskite cell;
optionally, wherein the photovoltaic module further includes a junction box (3), and the junction box (3) is located on a side on which a long side of the laminate (1) is located, or the junction box (3) is located on a side on which a short side of the laminate (1) is located; and
the junction box (3) is an integrated junction box, and the integrated junction box is separately connected to a positive electrode and a negative electrode of the laminate (1); or
the junction box (3) includes a first junction box (31) and a second junction box (32), the first junction box (31) is connected to a positive electrode of the laminate (1), and the second junction box (32) is connected to a negative electrode of the laminate (1).

11. The photovoltaic module according to any one of claims 1 to 9, wherein the photovoltaic module further includes a junction box (3) and an inverter (4), and the junction box (3) and the inverter (4) are arranged in the first direction (X);
a distance S1 between the inverter (4) and an edge of the photovoltaic module in the first direction (X) satisfies 350 mm ≤ S1 ≤ 400 mm; and
a distance S2 between the inverter (4) and an edge of the photovoltaic module in the second direction satisfies 240 mm ≤ S2 ≤ 300 mm.

12. The photovoltaic module according to claim 7, wherein the clamping part (21) includes a third part (213), and the first part (211) and the third part (213) are arranged on two sides of the laminate (1) in the thickness direction (Z) of the laminate (1);
the third support part (24), the first support part (22), the third part (213), and the second support part (23) are sequentially connected to define a cavity (2A);
the photovoltaic module further includes a corner brace (200), the corner brace (200) includes two connection portions connected in an L shape, each connection portion includes a first connection sub-plate (2111) and a second connection sub-plate (221) that are parallel to each other, and a clearance groove (202) is formed between the first connection sub-plate (2111) and the second connection sub-plate (221); and
the first connection sub-plate (2111) is located in the cavity (2A) and the second support part (23) is located in the clearance groove (202), or, the second connection sub-plate (221) is located in the cavity (2A) and the first support part (22) is located in the clearance groove (202);
optionally, wherein a width of the clearance groove (202) is less than or equal to a thickness of the first support part (22), or, a width of the clearance groove (202) is less than or equal to a thickness of the second support part (23);
optionally, wherein a surface of the first connection sub-plate (2111) facing the clearance groove (202) and/or a surface of the second connection sub-plate (221) facing the clearance groove (202) have a snap-fit structure.

13. The photovoltaic module according to claim 12, wherein the clamping part (21) is provided with a plurality of adhesive overflow grooves (215) on an inner wall of the clamping part (21) facing the laminate (1), the plurality of adhesive overflow grooves (215) are configured to accommodate a part of structural adhesive, filled between the clamping part (21) and the laminate (1).

14. The photovoltaic module according to claim 12 or claim 13, wherein either or both of the third part (213) and the third support part (24) is provided with a reinforcing rib (2C), and the reinforcing rib (2C) is located in the cavity (2A).

15. The photovoltaic module according to any one of claims 12 to 14, wherein at least one reinforcing part (2B) parallel to the first support part (22) is arranged in the cavity (2A); or
at least one reinforcing part (2B) parallel to the third support part (24) is arranged in the cavity (2A); or
at least two reinforcing parts (2B) perpendicular to each other are arranged in the cavity (2A), so that the first support part (22), the third part (213), the second support part (23), the third support part (24), and the at least two reinforcing parts (2B) define a structure in the shape of a four-square grid; or
at least two reinforcing parts (2B) that intersect and are not perpendicular to each other are arranged in the cavity (2A), and two adjacent reinforcing parts (2B) are connected to form a V-shaped structure or an X-shaped structure.
